(19) Europäisches Patentamt / European Patent Office / Office européen des brevets

(11) **EP 4 365 781 A1**

(12) **EUROPEAN PATENT APPLICATION**
published in accordance with Art. 153(4) EPC

(43) Date of publication:
**08.05.2024 Bulletin 2024/19**

(21) Application number: **22832381.2**

(22) Date of filing: **26.01.2022**

(51) International Patent Classification (IPC):
**G06N 20/00** *(2019.01)*    **G06N 99/00** *(2019.01)*

(52) Cooperative Patent Classification (CPC):
**G06N 20/00; G06N 99/00**

(86) International application number:
**PCT/JP2022/002805**

(87) International publication number:
**WO 2023/276213 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2021 JP 2021109634**

(71) Applicant: **Sony Group Corporation
Tokyo 108-0075 (JP)**

(72) Inventor: **IDE, Naoki
Tokyo 108-0075 (JP)**

(74) Representative: **D Young & Co LLP
3 Noble Street
London EC2V 7BQ (GB)**

(54) **INFORMATION PROCESSING DEVICE, INFORMATION PROCESSING METHOD, AND INFORMATION PROCESSING PROGRAM**

(57) An information processing device according to the present disclosure includes: an acquisition unit that acquires a data supply method, a model to be trained, and designation information related to a size and a category of a sample set to be used for training of the model; and a selection unit that selects a sample set to be used for the training of the model from a dataset based on information entropy determined according to the model and the designation information.

FIG.10

**Description**

Field

The present disclosure relates to an information processing device, an information processing method, and an information processing program.

Background

In conventional deep learning, performance has been improved by developing a structure of a model such as a prediction model and a learning method. In such improvement of performance, the main duty of the user such as a developer has been creation of a unique model structure and a learning method and conducting benchmark evaluation of the performance by using, for example, a task such as general object image classification and a dataset such as ImageNet (for example, Non-Patent Literature 1).

Furthermore, machine learning such as deep learning is facing a phase shift to application in the real world. This has led to the requirement on the user to create a task such as a unique prediction function to be implemented and collect unique data for the implementation of the task.

Citation List

Non Patent Literature

Non Patent Literature 1: "Deep Residual Learning for Image Recognition", Kaiming He, Xiangyu Zhang, Shaoqing Ren, Jian Sun <Internet> https://arxiv.org/abs/1512.03385

(Searched on June 23, 2021)

Summary

Technical Problem

However, there is a problem of difficulty for the user to select data to be used for the learning in order to implement the task. For example, it is difficult for the user to select a sample set such as an appropriate dataset for training the model for implementation of the user's task from among the dataset including a large amount of data. Therefore, it is desired to select an appropriate sample set from the dataset.

Therefore, the present disclosure proposes an information processing device, an information processing method, and an information processing program capable of selecting an appropriate sample set from a dataset. Solution to Problem

According to the present disclosure, an information processing device includes an acquisition unit that acquires a data supply method, a model to be trained, and designation information related to a size and a category of a sample set to be used for training of the model; and a selection unit that selects a sample set to be used for the training of the model from a dataset based on information entropy determined according to the model and based on the designation information.

Brief Description of Drawings

FIG. 1 is a diagram illustrating a configuration example of an information processing system of the present disclosure.
FIG. 2 is a flowchart illustrating a processing procedure by the information processing system.
FIG. 3 is a diagram illustrating an example of a block configuration of an information processing system.
FIG. 4 is a diagram illustrating an example of a user interface.
FIG. 5 is a diagram illustrating a part of a block configuration of the information processing system.
FIG. 6 is a diagram schematically illustrating a tunneling effect.
FIG. 7 is a diagram illustrating an example of a main program of information processing.
FIG. 8 is a flowchart illustrating a procedure of data selection optimization processing.
FIG. 9 is a diagram illustrating an example of a data selection optimization processing program.
FIG. 10 is a diagram illustrating a configuration example of an information processing device of the present disclosure.

FIG. 11 is a diagram illustrating a configuration example of an optimization machine of the present disclosure.

FIG. 12 is a diagram illustrating an example of a list of classes.

FIG. 13 is a diagram illustrating an example of selection of a class that the user desires to train.

FIG. 14 is a diagram illustrating an example of reception of data from a user.

FIG. 15 is a diagram illustrating a fifth exemplary embodiment to which the information processing system is applied.

FIG. 16 is a flowchart illustrating a procedure of processing in a fifth exemplary embodiment.

FIG. 17 is a diagram illustrating a flow of image determination processing.

FIG. 18 is a hardware configuration diagram illustrating an example of a computer that implements functions of the information processing device. Description of Embodiments

Embodiments of the present disclosure will be described below in detail with reference to the drawings. Note that the information processing device, the information processing method, and the information processing program according to the present application are not limited by the embodiments. Moreover, in each of the following embodiments, the same parts are denoted by the same reference symbols, and a repetitive description thereof will be omitted.

The present disclosure will be described in the following order of items.

1. Overview

    1-1. Background (problem, etc.)

    1-2. Overview of the present disclosure (processing, effects, etc.)

2. First exemplary embodiment

    2-1. Device configuration of information processing system

    2-2. Overall processing flow of information processing system

    2-3. Overall block image of information processing system

        2-3-1. Optimization machine

        2-3-2. User interface

            2-3-2-1. User interface unit (data input unit)

            2-3-2-2. User interface unit (machine selection unit)

            2-3-2-3. User interface unit (data output unit)

        2-3-3. Information processing device (main block)

3. Second exemplary embodiment

    3-1. Quantum annealing and combinatorial optimization problems

    3-2. Sample extraction optimization from dataset

    3-3. Implementation of resampling optimization to quantum annealing, etc.

4. Third exemplary embodiment

    4-1. Regression model

    4-2. Two-class classification model

    4-3. Multi-class classification model

5. Fourth exemplary embodiment

    5-1. Main program example of information processing

    5-2. Example of data selection optimization processing flow

    5-3. Example of data selection optimization processing program

6. Configuration of information processing device

7. Configuration of optimization machine

8. Example of presentation to user

    8-1. List of classes

8-2. Selection of class
8-3. Reception of data

9. Application example

9-1. Fifth exemplary embodiment (image classification)
9-2. Sixth exemplary embodiment (biomolecule)

10. Other configuration examples, etc.

10-1. Other configuration examples
10-2. Method of generating information used for processing of program, parameters, etc.
10-3. Others

11. Effects according to present disclosure
12. Hardware Configuration

[1. Overview]

Before describing the details of the present disclosure, an outline of the technical background according to the present disclosure and an outline of the present disclosure will be described. In the following technical description, detailed description of known technologies will be omitted as appropriate.

[1-1. Background (problems, etc.)]

First, problems related to the present disclosure will be described in detail below. In machine learning such as deep learning, collection of a dataset used for the training of a model is not easy, and cost reduction in collecting the dataset is one of problems. There are several known attempts to solve the cost reduction in collecting datasets by the learning method, including the following three learning methods, for example.

· Semi-supervised learning: A learning method that utilizes unlabeled data as it is
· Active learning: Method of performing learning while labeling unlabeled data
· Transfer learning: Learning method that utilizes a trained model with another dataset

The first and second methods out of the above three learning methods, that is, semi-supervised learning and active learning, are measures against the cost of labeling among the problems in dataset collection (construction). Labeling is an operation of adding information to data, and is usually performed manually, leading to high cost.
In addition, labeling includes processing difficult to implement without advanced knowledge and work, such as measurement of physical quantities based on scientific experiments and diagnosis of pathological images. For example, measurement of a band gap of a semiconductor, measurement of optical characteristics measurement information, reaction rates, and equilibrium deviations of organic and inorganic molecules, and the like can also be regarded as labeling from the viewpoint of training a prediction model in machine learning using these measurements as data.
Meanwhile, active learning is a learning method of appropriately selecting and labeling one or a plurality of pieces of data from a dataset and using the data for updating a prediction model (hereinafter also simply referred to as "model"). Efficiently selecting the data to be labeled according to the model will eliminate the necessity to label all the data, which leads to cost reduction of labeling.
On the other hand, among the above three learning methods, the last one, that is, transfer learning is a technology focusing on diversion of information of another dataset rather than reduction in labeling cost. In transfer learning, a user downloads a model having embedded information of another dataset from the system, and updates (a part of) parameters of this model with the obtained dataset.
In addition, in transfer learning, a model distributed from a system generally tends to have a large size (footprint), and this is because the model is designed to have a size capable of supporting various types of information. However, from the viewpoint of the transfer destination user, time and energy are consumed for information processing other than the prediction target. That is, the efficiency of information for the model is low on the user side.
In addition, since the information of the dataset has been converted into model parameters, what type of data is being learned is unknown, which is also a problem. Recently, the ethics in using artificial intelligence has been disputed, and it is desirable that data itself is supplied for more fair and upright learning.
In view of the above, it is desired to efficiently search and provide a subset aggregating information included in the dataset without excess or deficiency according to a model desired by the user, such as a prediction model possessed by the user.

[1-2. Overview of the present disclosure (processing, effects, etc.)]

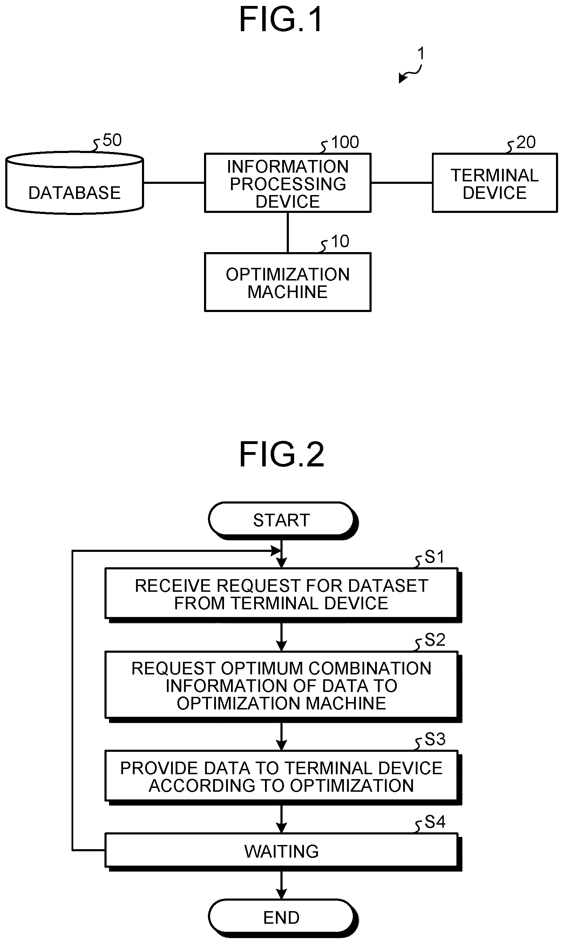

Therefore, for example, in a case where a model is presented from the user, an information processing system 1 (refer to FIG. 1) described in detail below provides a subset that most efficiently provides information to the model of the user from a dataset accessible from the information processing system 1.

For example, the information processing system 1 selects an optimal (sample) subset for updating a model, customized to a model possessed by the user, and provides the selected subset, instead of widely distributing the model trained to learn the information of the dataset. Examples of the information provided by the information processing system 1 include a subset sampled from a dataset or a data simulator. Note that the information processing system 1 may provide various types of information such as a model trained by the subset as necessary, and details of this point will be described below.

The subset selected by the information processing system 1 is a dataset that most reduces ambiguity of the model possessed by the user, in other words, a subset selected to have the highest information extraction efficiency. In order to achieve high accuracy optimization processing, the optimization of the subset selection by the information processing system 1 is implemented by using a certain combinatorial optimization machine (hereinafter also referred to as "optimization machine") such as a quantum annealing machine or a combinatorial optimization accelerator specialized for speeding up binary quadratic combinatorial optimization.

According to the information processing system 1, the user can efficiently collect, from an existing dataset or the like, data to be used for updating the model generated with current information. Therefore, according to the information processing system 1, it is possible to have effects of reducing the development period and the development cost and increasing the number of trials.

According to the information processing system 1, the user can acquire a subset having the largest contribution to the update of the model. Therefore, according to the information processing system 1, the model is optimized only for information desired to be predicted, leading to functional performance improvement.

Furthermore, according to the information processing system 1, the user can obtain a subset of unlabeled data having the largest contribution to the update of the model possessed by the user. Therefore, according to the information processing system 1, it is possible to implement labeling or implement analysis work corresponding to labeling in order from analysis target data expected to have the greatest wealth of knowledge.

In addition, according to the information processing system 1, the optimization of the subset is implemented by using an optimization machine such as a quantum annealing machine. Quantum annealing is theoretically known to be able to asymptotically reach a global optimal solution, and thus can provide an optimal subset compared with approximation of the greedy method, which is a representative example of an algorithm implemented in the conventional combinatorial optimization. First, in the following, a system configuration example and the like of the entire information processing system 1 will be described as a first exemplary embodiment, and then each processing and application example will be described.

[2. First exemplary embodiment]

[2-1. Device configuration of information processing system]

First, a configuration of the information processing system 1 illustrated in FIG. 1 will be described. FIG. 1 is a diagram illustrating a configuration example of an information processing system of the present disclosure. As illustrated in FIG. 1, the information processing system 1 includes an optimization machine 10, a terminal device 20, a database 50, and an information processing device 100. For example, the information processing system 1 includes: the database 50 that stores a large amount of data; the information processing device 100 being a server that generates a subset from a dataset; the terminal device 20 used by a user to send a request to the information processing device 100 and receive the subset; and the optimization machine 10 used by the information processing device 100 to generate the subset.

The information processing device 100, the optimization machine 10, the terminal device 20, and the database 50 are communicably connected to each other in a wired or wireless channel via a predetermined communication network (network NT). Note that the information processing system 1 may include a plurality of the information processing devices 100, a plurality of the optimization machines 10, a plurality of terminal devices 20, and a plurality of the databases 50.

The optimization machine 10 is a computer (optimization calculation dedicated machine) used to solve a combinatorial optimization problem. For example, the optimization machine 10 is an accelerator of optimization processing used when creating an optimal subset. Examples of the optimization machine 10 include a combinatorial optimization machine (discrete optimization dedicated machine) such as an Ising machine including a quantum annealing machine as a representative. A specific example of the optimization machine 10 will be described below.

The terminal device 20 is a computer used by a user. The terminal device 20 requests a subset from the information processing device 100, and receives the subset from the information processing device 100. For example, this subset may be used for training the model, or may be used when the model is actually trained with the terminal device 20 or in the subsequent stage of the terminal device 20. For example, the subset is utilized as a set of references in aggregating the sizes of the models. Note that the information processing system 1 may supply parameters obtained by the learning with the subsets.

The request for the subset from the terminal device 20 may be performed in a mode of an input (transmission) of the model itself. Furthermore, instead of the model created by the user in advance, the model may be determined according to guidance presented from the information processing system 1 side. Furthermore, for example, the terminal device 20 may receive designation of the size of the subset (such as data quantity) as the request related to the designation of the subset. When having received the designation of data quantity of the subset by the user, the terminal device 20 transmits designation information indicating data quantity of the subset designated by the user to the information processing device 100. The terminal device 20 may transmit the dataset collected by the user to the information processing device 100.

Various operations are input from the user to the terminal device 20. The terminal device 20 receives the input made by the user. The terminal device 20 receives selection of the optimization machine 10 by the user. The terminal device 20 receives, as an input, a user's operation on the displayed content. Note that the terminal device 20 may be any device as long as the above-described processing can be implemented. Furthermore, the terminal device 20 may be a device such as a smartphone, a tablet terminal, a laptop personal computer (PC), a desktop PC, a mobile phone, or a personal digital assistant (PDA), for example.

The database 50 is a database that stores a large-scale dataset. The dataset stored in the database 50 is a dataset (large-scale dataset) having a scale capable of training a model that can be transferred to various applications.

The information processing device 100 is a server device (computer) that selects a sample set such as a subset used for model training and an output of a simulator from the dataset stored in the database 50. The information processing device 100 selects a sample set based on a data supply method such as data supply from a dataset or simulation. For example, the data supply method is data supply from a dataset. Also, for example, the sample set is a subset of a dataset. The information processing device 100 selects a sample set to be used for training the model from the dataset based on an information entropy determined according to the model to be trained and designation information related to the size and the category of the sample set to be used for training the model. For example, the model to be trained is a prediction model with a learning parameter. In addition, for example, the task of the model is a type classification of an output of the model corresponding to the input to the model. Furthermore, for example, the information entropy is information entropy calculated using Kullback-Leibler divergence or Fisher information, and details thereof will be described below. For example, the information processing device 100 receives information necessary for processing by communication with the optimization machine 10, the terminal device 20, and the database 50, and selects a subset to be used for the training of the model using the received information. For example, the information processing device 100 selects a subset from the database 50 in response to a request from the terminal device 20, and transmits the selected subset to the terminal device 20.

In the selection of the subset in the information processing system 1, optimization is performed by the optimization machine 10. When creating the subset determined to be optimal, the information processing system 1 may add the dataset from the terminal device 20 to a large-scale dataset such as a dataset stored in the database 50.

[2-2. Overall processing flow of information processing system]

Next, an overall processing flow of the information processing system will be described with reference to FIG. 2. FIG. 2 is a flowchart illustrating a processing procedure by the information processing system.

As illustrated in FIG. 2, first, the information processing device 100 receives a dataset request from the terminal device 20 (Step S1). The information processing device 100 receives a request for providing a dataset from the terminal device 20. For example, the request may include a model itself in a specific format, and the request is transmitted from the terminal device 20 to the information processing device 100. In addition, as the request, a class name or the like of a category constituting a domain desired to be handled by the user may be transmitted from the terminal device 20 to the information processing device 100. Furthermore, the dataset itself collected by the user may be transmitted from the terminal device 20 to the information processing device 100 as the request.

Subsequently, the information processing device 100 requests the optimization machine 10 for optimum combination information of data (Step S2). The information processing device 100 transmits necessary information to the optimization machine 10 in order to select optimum data for the user's request from large-scale data such as a dataset stored in the database 50. This information relates to a restriction of data size to be provided to the terminal device 20 and an information amount of a combination of data, and details thereof will be described below.

Subsequently, the information processing device 100 provides data to the terminal device 20 according to the optimization (Step S3). The information processing device 100 generates a subset of the dataset stored in the database 50 based on the result from the optimization machine 10, and provides the generated dataset to the terminal device 20.

The information processing device 100 waits until there is a next request (Step S4), and in a case where there is the next request, processing returns to Step S1 the processing is repeated. Furthermore, in a case where there is no next request and a predetermined period has elapsed, the information processing device 100 ends the processing.

[2-3. Overall block image of information processing system]

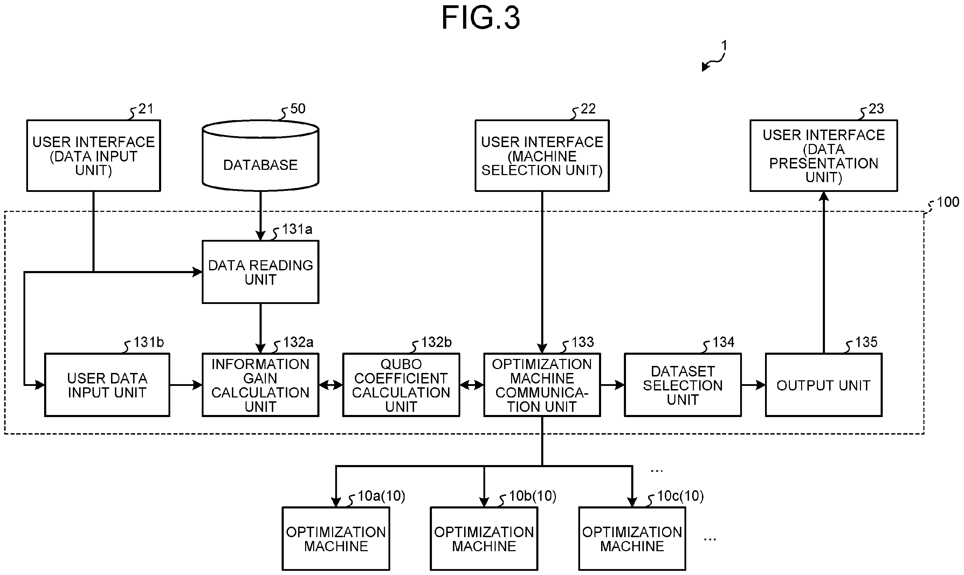

Next, an overall block image of the information processing system will be described with reference to FIG. 3. FIG. 3 is a diagram illustrating an example of a block configuration of the information processing system.

As illustrated in FIG. 3, the information processing system 1 includes user interface units 21, 22, and 23, an information processing device 100 that is a main block and functions as a dataset generation unit, a database 50 that is storage of a dataset connected to the main block, and a plurality of optimization machines 10 specialized for optimization processing.

[2-3-1. Optimization machine]

The information processing system 1 includes a plurality of the optimization machines 10 such as an optimization machine 10a, an optimization machine 10b, and an optimization machine 10c. Note that, in a case where the optimization machine 10a, the optimization machine 10b, the optimization machine 10c, and the like are described without being particularly distinguished, they are described as the "optimization machine 10". Although FIG. 3 illustrates three optimization machines 10, namely, the optimization machine 10a, the optimization machine 10b, and the optimization machine 10c, the information processing system 1 may include four or more optimization machines 10. The optimization machine 10 is a computer (calculator) using an Ising model. The optimization machine 10 is a computer (combinatorial optimization machine) that solves a combinatorial optimization problem using an Ising model.

The optimization machine 10a is a quantum computer (quantum calculator) that solves a problem using quantum annealing. The optimization machine 10a can be implemented by a quantum annealing system or a quantum annealer. For example, the optimization machine 10b is a combinatorial optimization accelerator using a device such as a complementary metal-oxide-semiconductor (CMOS). For example, the optimization machine 10c is a combinatorial optimization accelerator using a processor such as a graphics processing unit (GPU) or using an integrated circuit such as a field programmable gate array (FPGA). Note that the optimization machine 10 is not limited to the hardware configuration including the optimization machine 10a, the optimization machine 10b, the optimization machine 10c, or the like described above, and may have any hardware configuration.

[2-3-2. User interface]

The information processing system 1 includes: a user interface unit 21 being a data input unit; a user interface unit 22 being a machine selection unit; and a user interface unit 23 being a data presentation unit. Note that the user interface unit 22 is optional, and need not be included in the information processing system 1 in a case where selection of the optimization machine 10 by the user is not received.

For example, the user interface units 21, 22, and 23 are implemented by the terminal device 20. That is, the terminal device 20 has functions corresponding to the user interface units 21, 22, and 23, and performs various types of processing such as reception of data input by the user, reception of selection of the optimization machine 10 by the user, and presentation of provided information.

[2-3-2-1. User interface unit (data input unit)]

First, functions corresponding to the user interface unit 21 being a data input unit will be described. The user interface unit 21 is an interface for inputting information of a dataset desired by the user, a model desired to be customized, and a dataset actually collected by the user. The user interface unit 21 may be a command line interface or a graphic interface.

For example, the simplest input is an input of a model alone. For example, the user interface unit 21 inputs a neural network model to be trained by deep learning in the form of a file generated according to a format. In order to acquire more detailed information, the following four pieces of information and the like may be requested to the user. For example, the user interface unit 21 receives inputs of the following four pieces of information and the like.

What is a task (function desired to be implemented) (regression, class discrimination or classification. Number of classes: one or plurality)
· Whether to use labeled data or self-label data
· What is the domain of data (image, audio, language, item data · · · )
· Domain/class name: existing class or unknown class held by system?

For example, in the information processing system 1, processing is supposed to branch inside according to the answers to the questionnaire such as the above four pieces of information.

[2-3-2-2. User interface unit (machine selection unit)]

Next, functions corresponding to the user interface unit 22 being a machine selection unit will be described. The user interface unit 22 is an interface for selecting which method to use as an optimization method in implementation of optimization when sampling data from a dataset. There are already various machines (optimization machines 10) as optimization computation-specific computers for achieving high-speed combinatorial optimization, and the machines can also be used by users via a cloud or the like.

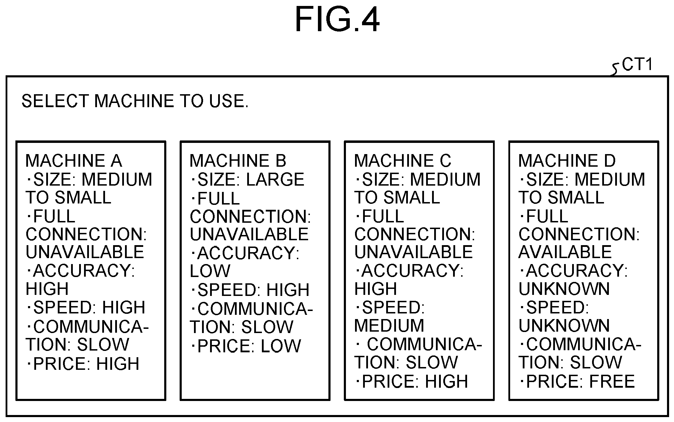

Meanwhile, each of the optimization machines 10 has advantages and disadvantages, strengths and weaknesses, and the like. For example, the user interface unit 22 may present content CT1 including information of each machine (optimization machine 10) as illustrated in FIG. 4 via a graphical user interface (GUI) or the like. In this case, the user who has confirmed the content CT1 selects a desired optimization machine 10 according to the purpose.

FIG. 4 is a diagram illustrating an example of a user interface. In FIG. 4, the content CT1 is illustrated as a case where four optimization machines 10, namely, machines A to D, are presented as selection candidates. The content CT1 includes, for each of the four optimization machines 10 of the machines A to D, information indicating evaluation on a plurality of items such as size, availability of full connection, accuracy, speed, communication, and price. Note that the presentation method illustrated in FIG. 4 is merely an example, and the presentation method to the user may be in any form as long as the user can select a desired optimization machine 10.

For example, in response to a request from the terminal device 20, the information processing device 100 generates the content CT1 and transmits the generated content CT1 to the terminal device 20. Having received the content CT1, the terminal device 20 displays the content CT1. The user of the terminal device 20 confirms the content CT1 displayed on the terminal device 20, compares the advantages and disadvantages, as well as the strengths and weaknesses, of the four optimization machines 10, namely the machines A to D, and selects the optimization machine 10 to use. The terminal device 20 that has received the user's selection of the optimization machine 10 transmits information indicating the optimization machine 10 selected by the user to the information processing device 100. The information processing device 100 that has received the information indicating the optimization machine 10 selected by the user requests the optimization machine 10 selected by the user to perform processing.

[2-3-2-3. User interface unit (data output unit)]

Next, functions corresponding to the user interface unit 23 being a data output unit will be described. The user interface unit 23 is an interface that presents a subset of datasets provided according to a function desired to be implemented by the user. The user interface unit 23 may be a command line interface or a graphic interface.

For example, the user interface unit 23 supplies a subset (dataset). Not limited to the subset, the user interface unit 23 is may supply parameters obtained by the learning with the subset. For example, the user interface unit 23 may supply parameters obtained by the learning with the subset, together with the subset. Furthermore, the user interface unit 23 may present the parameters obtained by the learning with the original dataset instead of the subset, according to designation from the user.

The user who receives the supply from the user interface unit 23 can also directly use the parameters of the obtained model. On the other hand, the information processing system 1 has already obtained a dataset necessary for the learning. In this manner, since the dataset necessary for the learning has been obtained, the information processing system 1 can perform redesign and re-learning of the function to be implemented so as to have higher efficiency and higher performance.

[2-3-3. Information processing device (main block)]

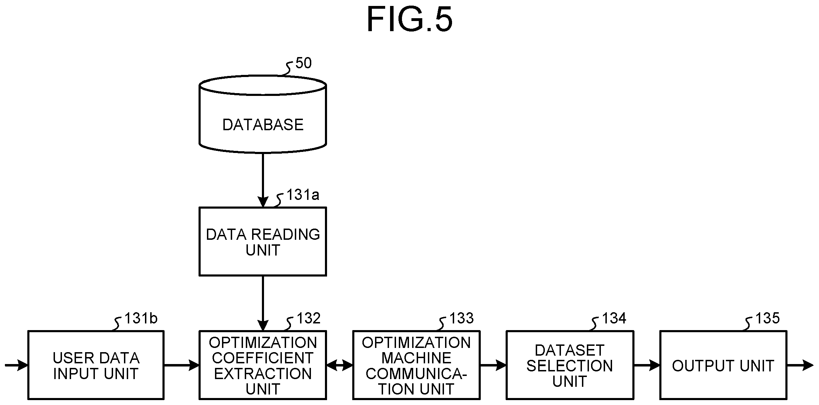

Next, a core portion of the information processing system 1, such as the information processing device 100 which is a main block, will be described with reference to FIGS. 3 and 5. FIG. 5 is a diagram illustrating a part of a block configuration of the information processing system. The core portion of the information processing system 1 illustrated in FIG. 5 includes the database 50, a data reading unit 131a, a user data input unit 131b, an optimization coefficient extraction unit 132, an optimization machine communication unit 133, a dataset selection unit 134, and an output unit 135.

In each configuration in FIG. 5, the configuration other than the database 50 is the configuration of the information processing device 100, and corresponds to the configuration illustrated in the dotted line in FIG. 3. In FIG. 5, the points similar to those in FIG. 3 are denoted by similar reference numerals. Note that the optimization coefficient extraction unit 132 is formed by integrating an information gain calculation unit 132a and a QUBO coefficient calculation unit 132b illustrated in FIG. 3. That is, the optimization coefficient extraction unit 132 is a component having both functions of the information gain calculation unit 132a that performs calculation regarding an information gain and the QUBO coefficient calculation unit 132b that calculates a coefficient of quadratic unconstrained binary optimization (QUBO).

Hereinafter, each configuration illustrated in FIG. 5 will be described. The database 50 is a database that store a large amount of cross-sectional data (large-scale data). For example, the database 50 stores any type of dataset such as ImageNet.

The data reading unit 131a has a function of reading a database. For example, the data reading unit 131a acquires data from the database 50. In a case where a certain class is designated in the request from the user, the data reading unit 131a acquires data of the designated class.

The user data input unit 131b is a module having a function of receiving a request from the user. For example, the request from the user has the following two input patterns. For example, the first pattern is a pattern of inputting a prediction model that the user desires to train. In addition, the second pattern is a pattern of inputting data already possessed by the user.

The optimization coefficient extraction unit 132 extracts coefficient information of an objective function of optimization based on a combinatorial optimization formulation to be described below from data of a large-scale database and data input by the user. The optimization machine communication unit 133 transmits the coefficient information of the objective function to the optimization machine 10, and receives the variable after the optimization processing. The dataset selection unit 134 selects a subset (dataset) based on the optimization result. The output unit 135 outputs information based on the selection result. Note that details of each configuration of the information processing device 100 will be described below.

[3. Second exemplary embodiment]

Hereinafter, as a second exemplary embodiment, a method of implementation of data extraction optimization using quantum annealing, which is a central part of the present disclosure, will be described. In the following, quantum annealing and combinatorial optimization will be described prior to the description of the optimization of the combination of data of the main body. A combinatorial optimization formulation in sample extraction from the dataset will be described thereafter. Finally, a method of implementing combinatorial optimization of sample extraction on a combinatorial optimization machine will be described.

[3-1. Quantum annealing and combinatorial optimization problems]

Quantum annealing is one of methods for searching an energy ground state of an Ising model, and is considered to be a type of quantum calculation used specifically for the purpose of speed-up of combinatorial optimization. The Ising model is a physics model originally proposed by a physicist Ising to explain a phase transition phenomenon of a ferromagnetic body (magnet) with respect to temperature. The following Formula (1) is a Hamiltonian (energy function) of an Ising model that is a generalized original magnet model, and this model may be referred to as a spin-glass model for distinction from the original Ising model.

$$H = -\sum_{i,j} J_{ij}\, \sigma_i \sigma_j + \sum_k h_k \sigma_k \qquad \cdots (1)$$

In Formula (1), $\sigma_i$ is a variable that takes -1 or 1 as a physical quantity referred to a spin, and the subscript represents a serial number. Furthermore, $J_{ij}$ is a constant referred to as bond energy, and represents the magnitude of interaction acting between two spins, and the suffix represents a serial number of the two spins. $h_k$ is a constant referred to as a local magnetic field and represents the magnitude of the local magnetic field acting on the spin, and the subscript is the spin number on which the local magnetic field acts.

In physics, a state in which an energy function is minimized is referred to as a ground state, and a physical system that has transitioned sufficiently slowly is supposed to reach the minimum state of energy, that is, the ground state. The combinatorial optimization problem is a problem of searching for an optimal solution represented in the form of a set. The combinatorial optimization problem is known to include a large number of difficult-to-calculate problems including a traveling salesman problem and other problems, which require an entire search that causes combinatorial explosion in order to obtain a strict optimal solution. Among the combinatorial optimization, the problem is equivalent to quadratic unconstrained binary optimization referred to as QUBO having an objective function of a form indicated in the following Formula (2) under appropriate variable transformation.

$$L = \sum_{i,j} Q_{ij} b_i b_j \qquad \cdots (2)$$

Here, $b_i$ in Formula (2) is a binary variable that takes either a binary value of 0 or 1, and $Q_{ij}$ is a coefficient matrix of QUBO.

QUBO can be transformed into a form equivalent to the energy function of the Ising model by excluding the constant term. Specifically, it can be confirmed by replacing $b_i$ with $\sigma_i$ as in the following Formula (3). Furthermore, the coefficient matrices $J_{ij}$ and $h_k$ of the QUBO problem are expressed as the following Formulas (4) and (5) .

$$b_i = (1 - \sigma_i)/2 \qquad \cdots (3)$$

$$J_{ij} = -\frac{1}{4} Q_{ij} \qquad \cdots (4)$$

$$h_i = \frac{1}{4} \sum_j Q_{ij} + Q_{ji} \qquad \cdots (5)$$

Therefore, instead of considering an algorithm for implementation of QUBO, quantum annealing is devised in consideration of leaving optimization to realization of a physical ground state of an Ising model with this coefficient.

Quantum annealing treats a model such as the following Formula (6) obtained by adding a quantum fluctuation term to an Ising model.

$$H_{QA}(t) = \left(1 - \Gamma(t)\right) H_{Ising} + \Gamma(t) \sum_k \sigma_k^x \qquad \cdots (6)$$

In the model illustrated in Formula (6), first, the term of the quantum fluctuation is set dominant to realize the superposition state of all combinations, and the Hamiltonian of the Ising model is gradually made dominant. Under the condition that this process is adiabatic, the combination of spins finally reaches the ground state, that is, the state in which the energy is minimized. Therefore, when the coefficient matrices $J_{ij}$ and $h_k$ of the QUBO problem are set in advance to the Hamiltonian of the Ising model, the final combination of spins of the Ising model corresponds to the binary variable. In this manner, embedding the problem of the combinatorial optimization in the Ising model and adiabatically transitioning from the state of the quantum fluctuation to the ground state of the Ising model to cause the Ising spin to obtain the solution of the combinatorial optimization is referred to as quantum annealing.

For example, in Formula (6), in the state t = 0, the superposition term is dominant, and all combinations (solution candidates) are superimposed. In Formula (6), the superposition term is then loosened stepwise (for example, by increasing t) so as to be converged, achieving the ground state. Thereafter, the spin is measured in the ground state to be used as the optimal solution. Since these procedures are implemented by using known techniques of quantum annealing, detailed description thereof is omitted.

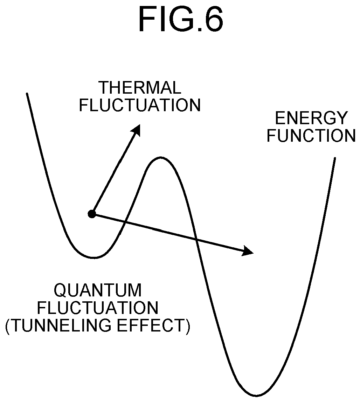

In the quantum annealing, it is assumed that relatively high-speed optimization is implemented by smoothly passing through the energy barrier by the quantum tunnel effect associated with the quantum fluctuation as illustrated in FIG. 6. FIG. 6 is a diagram schematically illustrating the tunneling effect.

However, when quantum annealing is implemented in an actual machine, it is difficult to maintain a quantum state, and this effect is considered limited.

Therefore, there is proposed dedicated hardware (combinatorial optimization accelerator) in which simulated annealing for performing energy minimization by thermal fluctuation is sped up using a non-quantum device such as a transistor circuit while continuously using the idea of embedding combinatorial optimization in an Ising model.

As described above, in the present disclosure, various types of hardware that simulate an Ising model, such as a quantum computer and a combinatorial optimization accelerator, are collectively referred to as an optimization machine.

What is common in implementing combinatorial optimization using these optimization machines, including quantum computers such as quantum annealing machines, is to rewrite the original combinatorial optimization problem into a binary optimization problem of a quadratic form that can be equivalent to an Ising model.

[3-2. Sample extraction optimization from dataset]

Hereinafter, the optimization of sample extraction from the dataset will be described. Prior to the description of optimization of sample extraction, an amount of information to be a reference for optimization will be described. Here, the Kullback-Leibler divergence and the Fisher information matrix will be briefly described.

The Kullback-Leibler divergence is an amount defined by the following Formula (7) for two probability distributions.

$$I(p|q) = \int p(x) \log p(x)\, dx - \int p(x) \log q(x)\, dx \qquad \cdots (7)$$

The Kullback-Leibler divergence is an expected value of uncertainty (entropy) of two probability distributions, and can be considered as a magnitude of information for making prediction by the probability distribution more reliable.

Next, a Kullback-Leibler divergence between prediction distributions p(x|w) and p(x|w') having different parameters is considered. This can be described as the following Formula (8) from the definition of the Kullback-Leibler divergence.

$$I(w, w') = \int p(x|w) \log p(x|w)\, dx - \int p(x|w) \log p(x|w')\, dx \qquad \cdots (8)$$

The information illustrated in Formula (8) can be expanded by Taylor expansion as in the following Formula (9) .

$$I(w, w') = \frac{1}{2} \mathrm{trace}[(w' - w)(w' - w)^T J(w)] + O(|w - w'|^3) \qquad \cdots (9)$$

Here, J(w) is a Fisher information matrix (expected Fisher information matrix) expressed by the following Formula (10).

$$J(w) = -\int p(x|w) \frac{\partial^2}{\partial w^T \partial w} \log p(x|w)\, dx \qquad \cdots (10)$$

For example, the Fisher information matrix is a concept such as variation sensitivity of an amount of information with respect to a parameter. Furthermore, the Fisher information matrix is known to have relationships such as the following Formulas (11) and (12).

$$J(w) = \int p(x|w) \frac{\partial}{\partial w^T} \log p(x|w) \frac{\partial}{\partial w^T} \log p(x|w)\, dx \qquad \cdots (11)$$

$$J(w) = \frac{1}{n} (E_X[(w_X - E_X[w_X])(w_X - E_X[w_X])^T])^{-1} \qquad \cdots (12)$$

Here, X is a dataset including n samples, and $w_X$ is a maximum likelihood parameter estimated from X. For example, the second relationship illustrated in Formula (12) indicates that the Fisher information matrix is in a proportional relationship with the inverse matrix of a covariance matrix (accuracy matrix) of the parameters.

From this, it can be seen that reducing the Mahalanobis distance between the two parameters calculated using the covariance matrix is equivalent to the optimization by the Kullback-Leibler divergence.

The purpose of the information processing system 1 is to provide a subset S that most closely approximates a parameter $w_D$, which is obtained by the learning with the dataset D, with a maximum likelihood parameter $w_S$. Hereinafter, based on the assumption that the model to be handled is a regression model as a discriminant model, a case where a predicted distribution of data can be decomposed as in the following Formula (13) will be discussed.

$$p(x, y|w) = p(x)p(y|x, w) \qquad \cdots (13)$$

On the other hand, the prediction distribution of the subset becomes as the following Formula (14) with a change only in the input distribution.

$$p(x, y|w') = q(x)p(y|x, w') \qquad \cdots (14)$$

At this time, the Fisher information matrices of D and S for w are expressed by the following Formulas (15) and (16), respectively.

$$J_p(w) = -\int p(x) \int p(y|x, w) \frac{\partial^2}{\partial w^T \partial w} \log p(y|x, w)\, dy\, dx \qquad \cdots (15)$$

$$J_q(w) = -\int q(x) \int p(y|x, w) \frac{\partial^2}{\partial w^T \partial w} \log p(y|x, w)\, dy\, dx \qquad \cdots (16)$$

In a case where the model handled is a regression model, for example, the above-described information gain illustrated in Formula (9) is changed as in the following Formula (17).

$$I(w_D, w_S) = -\frac{1}{2} \mathrm{trace}\left[(w_S - w_D)(w_S - w_D)^T J_p(w_D)\right] + O(|w_S - w_D|^3)$$

$$\cdots (17)$$

On the other hand, the average, variance, and covariance of the maximum likelihood parameter $w_S$ obtained in the subset S are calculated as in the following Formulas (18) and (19).

$$E_S[w_S] = w \qquad \cdots (18)$$

$$E_S\left[(w_S - E_S[w_S])(w_S - E_S[w_S])^T\right] = \frac{1}{|S|} J_q^{-1}(E_S[w_S]) \qquad \cdots (19)$$

Therefore, the expected value of the information amount gain due to the error of the maximum likelihood parameter is given by the following Formula (20).

$$E_S[I(w, w_S)] = \frac{|S|}{2} \mathrm{trace}\left[J_q^{-1}(w)J_p(w)\right] \qquad \cdots (20)$$

Here, when the optimization of the subset is more strictly performed by considering an expected value of the information amount gain per sample of the subset, the problem is grasped as a problem of minimization of the objective function as illustrated in the following Formula (21) .

$$L(w, b) = \mathrm{trace}\left[J_q^{-1}(w)J_p(w)\right] \qquad \cdots (21)$$

On the other hand, the dataset and the subset are expressed by the following formulas (22) and (23), respectively.

$$D = \{(x_1, y_1) \dots (x_N, y_N)\} \qquad \cdots (22)$$

$$S = \{(x_{s(1)}, y_{s(1)}) \dots (x_{s(K)}, y_{s(K)})\} \qquad \cdots (23)$$

Here, the dataset in which the input/output x and y are set has been described, but data having no output side, that is, unlabeled data may be used.

The binary variable $b_i$ is defined as a variable that becomes 1 when $x_i$ is included in S and becomes 0 otherwise. Then, the Fisher information matrices $J_p(w)$ and $J_q(w)$ can be replaced by the following Formulas (24) and (25).

$$J_p(w) \approx -\frac{1}{N} \sum_{i \in V} H_i(w) \qquad \cdots (24)$$

$$J_q(w, b) \approx -\frac{1}{M} \sum_{i \in V} b_i H_i(w) \qquad \cdots (25)$$

where M is Formula (26), and V is Formula (27) in the following.

$$M = \sum_{i \in V} b_i \qquad \cdots (26)$$

$$V = \{1 \dots N\} \qquad \cdots (27)$$

Further, $H_i(w)$ differs depending on whether the data is labeled data or unlabeled data. For example, in a case where the data is labeled data, $H_i(w)$ is defined as the following Formula (28).

$$H_i(w) = \frac{\partial^2}{\partial w^T \partial w} \log p(y_i | x_i, w) \qquad \cdots (28)$$

Furthermore, for example, in a case where the data is unlabeled data, the data is defined as the following Formula (29).

$$H_i(w) = \int p(y | x_i, w) \frac{\partial^2}{\partial w^T \partial w} \log p(y | x_i, w) \, dy \qquad \cdots (29)$$

The problem of subset optimization is replaced with the minimization of the loss function by the binary variable as illustrated in the following Formula (30).

$$L(w, b) = \frac{M}{N} \text{trace} \left( \left( \sum_{x_i \in V} b_i H_i(w) \right)^{-1} \sum_{x_i \in V} H_i(w) \right) \qquad \cdots (30)$$

When it is possible to find a binary variable that minimizes the loss function, that is, maximizes the information by resampling, it is only required to resample data in which the binary variable is 1. As a minor variation of this optimization, an example of adding a constraint condition can be considered.

An example of the constraint condition is to resample as efficiently as possible. In this case, the number of resampling is added to the loss function as a penalty term as in the following Formula (31).

$$L_1(w,b) = \frac{M}{N}\,\text{trace}\left(\left(\sum_{i\in V} b_i H_i(w)\right)^{-1}\sum_{i\in V} H_i(w)\right) + \gamma_1\sum_{i\in V} b_i \qquad \cdots (31)$$

Here, the coefficient $\gamma_1$ is a parameter that adjusts a trade-off between re-sampling optimization and re-sampling efficiency. When the value of the coefficient $\gamma_1$ increases, the resampling becomes efficient, but the maximum likelihood parameter of the resampled subset becomes a value deviated from the original maximum likelihood parameter.

In addition, as another example, the number of resampling is regulated. In this case, a square error between the number of samples to be resampled and a predetermined number is added to the loss function as a penalty term as in the following Formula (32).

$$L_2(w,b) = \frac{M}{N}\,\text{trace}\left(\left(\sum_{i\in V} b_i H_i\right)^{-1}\sum_{i\in V} H_i\right) + \gamma_2\left(M - \sum_{i\in V} b_i\right)^2 \qquad \cdots (32)$$

The coefficient $\gamma_2$ is a parameter that adjusts the trade-off between the optimization of resampling and the number constraint of resampling. Since the number constraint is usually prioritized, this value is set to be large.

Here, for example, the above-described objective function such as Formula (31) or Formula (32) has two variables of w and b. Optimization for the variable b that determines the subset is essential. This is obtained by a special accelerator such as the optimization machine 10 including quantum annealing.

On the other hand, whether or not to optimize w varies depending on the use case. For example, when there is only necessary to obtain an optimal dataset in the current model, this value may be fixed. Conceivable as such examples are, for example, where the purpose is to search and verify novel patterns for specific expression in gene analysis. In such a case, it is not always necessary to update the model since the purpose is to improve the efficiency of the analysis of the expression of the novel gene pattern.

Note that, for example, in a case where it is desired to obtain an optimal dataset while updating the model, the information processing system 1 alternately repeats the following procedure. The parameter $w_S$ estimated from the subset S is used as w, and a parameter that minimizes $L(w_S,b)$ is obtained as b. By repeating the above, the information processing system 1 can obtain the subset S and in addition, can obtain the parameter w more easily than the case of performing the learning with the entire dataset.

[3-3. Implementation of resampling optimization to quantum annealing, etc.]

Next, implementation of the resampling optimization to quantum annealing or the like will be described. In the information processing system 1, an objective function to be minimized for resampling the optimum subset is given as in the following Formula (33).

$$L(w,b) = \frac{1}{N}\sum_{k\in V} b_k\,\text{trace}\left(\left(\sum_{i\in V} b_i H_i(w)\right)^{-1}\sum_{i\in V} H_i(w)\right) + \gamma C(b) \qquad \cdots (33)$$

However, the second term C(b) is a penalty term for actualizing the constraint, and is expressed by the following Formulas (34) and (35), for example.

$$C_1(b) = \sum_{x_i\in V} b_i \qquad \cdots (34)$$

$$C_2(b) = \left( M - \sum_{x_i \in V} b_i \right)^2 \qquad \cdots (35)$$

Here, in order to implement optimization in the optimization machine 10 such as an Ising machine like a quantum annealing machine, it is necessary to set the objective function to a quadratic form of b, that is, a form of QUBO. However, the first term is not in a quadratic form. Therefore, an auxiliary variable $\Xi$ represented by a square matrix in the parameter number dimension is prepared to assume an objective function such as the following Formula (36).

$$L(w, b, \Xi) = \frac{1}{N} \sum_{k \in V} b_k \, \mathrm{trace}(\Xi) + \gamma C(b) + \frac{\lambda}{2} \left( \Xi \sum_{x_i \in V} b_i H_i(w) - \sum_{x_i \in V} H_i(w) \right)^2 \qquad \cdots (36)$$

Here, with the value $\lambda$ is sufficiently large, a constraint as illustrated in the following Formula (37) is satisfied to lead to the optimization of the original objective function.

$$\Xi = \left( \sum_{i \in V} b_i H_i(w) \right)^{-1} \sum_{i \in V} H_i(w) \qquad \cdots (37)$$

In order to simultaneously satisfy this constraint and sampling optimization, b and $\Xi$ are simultaneously (alternately) optimized. As described above, w is optimized according to the use case, but is not essential. In the optimization of the auxiliary variable $\Xi$, w and b may be fixed to obtain $\Xi$ in which the differential coefficient becomes 0 as illustrated in the following Formula (38).

$$\frac{\partial L(w, b, \Xi)}{\partial \Xi} = \frac{M}{N} I + \lambda H(b, w)^T \left( \Xi H(b, w) - H(1, w) \right) \qquad \cdots (38)$$

However, the expression is replaced with the following Formula (39).

$$H(b, w) = \sum_{x_i \in V} b_i H_i(w) \qquad \cdots (39)$$

The solution of this equation is expressed by the following Formula (40) when an inverse matrix of H (b, w) exists.

$$\Xi^* = \left( \frac{M}{N} + \lambda \right) H(1, w) H^{-1}(b, w) - \lambda H^{-2}(b, w) \qquad \cdots (40)$$

Regarding the points described above, an algorithm will be described below. The algorithm described here is an algorithm that is executed by the information processing system 1 and perform the following processes (1-1) to (1-4), for example.

(1-1): Determine one parameter w and one variable

(1-2): Using a quantum annealing machine (Quantum Processing Unit: QPU) or the like, w and $\Xi$ are fixed, and b is updated with b*.
(1-3): Using a normal arithmetic device (CPU or GPU),

(A) Obtain a subset S from b;
(B) The maximum likelihood parameter $w_S$ is obtained from the subset S, and w = $w_S$ (may be omitted).

(C) Fix b and w = $w_S$, and update $\Xi$ with $\Xi^*$.

(1-4): Repeat (1-2) and (1-3) until a predetermined end condition is satisfied.

For example, the initial value in the above algorithm may be randomly determined. Note that the method of determining the initial value is not limited to the above, and various methods can be considered.

[4. Third exemplary embodiment]

Here, a third exemplary embodiment will be described using an example in which further approximation and model limitation are performed on the second exemplary embodiment with simpler implementation.

First, regarding the Fisher information matrix $J_p(w)$, as described above, a relationship illustrated in the following Formula (41) is established.

$$J_p(w) = \int p(x) \int p(y|x,w) \frac{\partial l_w(x,y)}{\partial w^T} \frac{\partial l_w(x,y)}{\partial w} \, dy \, dx \qquad \cdots (41)$$

where $l_w(x,y)$ is the following Formula (42).

$$l_w(x,y) = \log p(y|x,w) \qquad \cdots (42)$$

At this time, the objective function of optimization can be transformed as the following Formula (43).

$$L(w,b) = -\int p(x) \int p(y|x,w) \frac{\partial l_w(x,y)}{\partial w} J_q^{-1}(w,b) \frac{\partial l_w(x,y)}{\partial w^T} \, dy \, dx$$

$$\leq -\int p(x) \int p(y|x,w) \left( \frac{\partial l_w(x,y)}{\partial w} \frac{\partial l_w(x,y)}{\partial w^T} \right)^2 \left( \frac{\partial l_w(x,y)}{\partial w} J_q(w,b) \frac{\partial l_w(x,y)}{\partial w^T} \right)^{-1} \, dy \, dx$$

$$\cdots (43)$$

The inequality can be obtained from the fact that $J_q(w,b)$ is a positive definite matrix (a matrix in which all the eigenvalues have positive values) and the inequality of the arithmetic mean (the average of the eigenvalues) and the harmonic mean (inverse of the average of the inverse of the eigenvalue (the eigenvalue of the inverse matrix)). The equal sign in the inequality sign in Formula (43) is satisfied when the eigenvalues of $J_q(w,b)$ are all 1. In addition, the right side of the inequality in the Formula (43) is the upper bound of the objective function. Therefore, when the upper bound is regarded as the objective function again, $L_{UB}(w,b)$ illustrated in the following Formula (44) becomes the objective function.

$$L_{UB}(w,b) = -\int p(x) \int p(y|x,w) \left( \frac{\partial l_w(x,y)}{\partial w} \frac{\partial l_w(x,y)}{\partial w^T} \right)^2 \left( \frac{\partial l_w(x,y)}{\partial w} J_q(w,b) \frac{\partial l_w(x,y)}{\partial w^T} \right)^{-1} \, dy \, dx$$

$$\cdots (44)$$

The inequality in Formula (43) ensures that the minimum value of the objective function is lower than the minimum value of this upper bound. Therefore, in the following, some specific models are applied to this upper bound $L_{UB}(w,b)$ to describe each implementation method. Specifically, implementation methods in a regression model, a two-class classification model, and a multi-class (K-class) classification model will be described.

[4-1. Regression model]

First, the case of the regression model will be described. The regression model will be given as a model of a normal distribution model as illustrated in the following Formula (45) in which the variance is normalized to 1.

$$p(y|x,w) = N(y|Wx,1) = \left(\frac{1}{\sqrt{2\pi}}\right)^d \exp\left(-\frac{1}{2}(y-Wx)^T(y-Wx)\right)$$

$$\cdots (45)$$

Although this example uses a linear model, it is also possible to use a nonlinear model with x as an input feature to the final layer of the deep learning neural network, for example. In this model, relationships as illustrated in the following Formulas (46) and (47) are obtained.

$$\frac{\partial l_w(x,y)}{\partial W} = (y-Wx)x^T \qquad \cdots (46)$$

$$J_q(w,b) = -\frac{1}{M}\sum_{j\in V} b_j\, xx^T \qquad \cdots (47)$$

When Formulas (46) and (47) are used, the objective function is expressed by the following Formula (48) .

$$L_{UB}(w,b) \approx \frac{1}{N}\sum_{m\in V} b_m \sum_{i\in V}\left(\sum_{j\in V} a_{ij} b_j\right)^{-1} \qquad \cdots (48)$$

However, the parameter $a_{ij}$ is defined as the following Formula (49).

$$a_{ij} = \left(\frac{x_i^T x_j}{x_i^T x_i}\right)^2 \qquad \cdots (49)$$

In order to perform optimization in the optimization machine 10 such as quantum annealing, the objective function is only required to be in a quadratic form of b. This problem can be transformed into a quadratic form as illustrated in the following Formula (50) by adding the following penalty term. It can be easily confirmed that the Formula (48) is satisfied when the penalty term is 0.

$$L_{UB1}(w,b,\xi) = \frac{1}{N}\sum_{m\in V} b_m \sum_{i\in V}\xi_i + \lambda\sum_i\left(\xi_i\sum_j a_{ij} b_j - 1\right)^2 \qquad \cdots (50)$$

In a case where it is desired to designate the size of the subset as M, the following Formula (51) may be used.

$$L_{UB1}(w,b,\xi) = \frac{M}{N}\sum_{i=1}^{N}\xi_i + \lambda_K\left(M-\sum_{k\in V} b_k\right)^2 + \lambda\sum_i\left(\sum_j \xi_i a_{ij} b_j - 1\right)^2$$

$$\cdots (51)$$

The objective function includes a continuous variable $\xi$ in addition to b as a variable to be optimized. However, since $\xi$ is a quadratic expression, an optimum value can be easily obtained by calculation using a normal computer. For example, the information processing device 100 obtains the optimum value of $\xi$ by using the following Formulas (52) and (53).

$$\frac{\partial}{\partial \xi} L_{UB1}(w, b, \xi) = \frac{M}{N} + 2\lambda(Ab \cdot (\xi \cdot Ab) - Ab) = 0 \qquad \cdots (52)$$

$$\xi_i = \frac{1}{\left(\sum_j a_{ij} b_j\right)^2}\left(\sum_j a_{ij} b_j - \frac{M}{2\lambda N}\right) \qquad \cdots (53)$$

For example, after fixing $\xi$ and optimizing b by the optimization machine 10 such as quantum annealing, the information processing system 1 fixes b and updates $\xi$ by the information processing device 100 with a normal calculation algorithm, and alternately repeats these optimizations.

Regarding the points described above, an algorithm will be described below. The algorithm described here is an algorithm that is executed by the information processing system 1 and perform the following processes (2-1) to (2-4), for example.

(2-1): Determine one parameter w and one variable $\xi$.
(2-2): Using a quantum annealing machine (QPU) or the like, w and $\xi$ are fixed, and b is updated with b*.
(2-3): Using a normal arithmetic device (CPU or GPU),

(A) Obtain a subset S from b;
(B) The maximum likelihood parameter $w_S$ is obtained from the subset S, and w = $w_S$ (may be omitted depending on the use case).
(C) The optimum parameter $\xi^{\wedge *}$ is obtained by fixing b and w = $w_S$, and $\xi$ is updated with $\xi^*$.

(2-4): Repeat (2-2) and (2-3) until a predetermined end condition is satisfied.

For example, the initial value in the above algorithm may be randomly determined. Note that the method of determining the initial value is not limited to the above, and various methods can be considered.

[4-2. Two-class classification model]

Next, a case of the two-class classification model will be described. For example, logistic regression used for two-class classification is assumed as a model using the following Formula (54).

$$p(y|x, w) = \sigma(yw^T x) = \frac{1}{1 + \exp(-yw^T x)} \qquad \cdots (54)$$

In the case of the unlabeled dataset, the following Formulas (55) and (56) are obtained.

$$\frac{\partial l_w(x, y)}{\partial w} = -yx^T \sigma(-yw^T x) \qquad \cdots (55)$$

$$J_q(w, b) = -\frac{1}{M}\sum_{i \in V} b_i x_i x_i^T \sigma(-w^T x_i)\sigma(w^T x_i) \qquad \cdots (56)$$

From the above, the following Formula (57) is obtained.

$$L_{UB}(w,b) = \frac{M}{N}\sum_{i\in V} \sigma(-w^T x_i)\sigma(w^T x_i)(x_i^T x_i)^2 \left(\sum_{j\in V} b_j \sigma(-w^T x_j)\sigma(w^T x_j)(x_i^T x_j)^2\right)^{-1}$$

$$\cdots (57)$$

Here, variables and coefficients are replaced as in the following Formula (58).

$$a_{ij} = \frac{\sigma(-w^T x_j)\left(1-\sigma(-w^T x_j)\right)}{\sigma(-w^T x_i)\left(1-\sigma(-w^T x_i)\right)}\left(\frac{x_i^T x_j}{x_i^T x_i}\right)^2 \qquad \cdots (58)$$

Then, the objective function can be written as the following Formula (59) using the binary variable set b.

$$L_{UB}(w,b) = \frac{M}{N}\sum_{i\in V}\left(\sum_{j\in V} a_{ij} b_j\right)^{-1} \qquad \cdots (59)$$

The objective function expressed by the Formula (59) can be transformed into a quadratic form of b by adding a penalty term as expressed by the following Formula (60).

$$L_{UB1}(w,b,\xi) = \frac{1}{N}\sum_{i=1}^{N}\sum_{j}\xi_i b_j + \lambda\sum_i\left(\sum_j \xi_i a_{ij} b_j - 1\right)^2 \qquad \cdots (60)$$

In order to designate the size of the subset as M, the following formula (61) may be used.

$$L_{UB1}(w,b,\xi) = \frac{M}{N}\sum_{i=1}^{N}\xi_i + \lambda_M\left(M - \sum_{k\in V} b_k\right)^2 + \lambda\sum_i\left(\sum_j \xi_i a_{ij} b_j - 1\right)^2 \qquad \cdots (61)$$

In any case, when $\xi_i$ satisfies the condition of the following Formula (62), it is equivalent to the original problem.

$$\xi_i = \left(\sum_{j=1}^{N} a_{ij} b_j\right)^{-1} \qquad \cdots (62)$$

Similarly to the regression model, $\xi$ is not optimized by the optimization machine 10 such as quantum annealing, and thus is optimized by the information processing device 100 using a normal calculation algorithm. In this two-class classification formulation, the method of calculating the coefficient $a_{ij}$ is different. However, the objective function using these coefficients is exactly the same as the regression model, and thus the detailed description of the algorithm is omitted.

[4-3. Multi-class classification model]

Next, a case of the multi-class classification model will be described. For example, a softmax function used for K-class classification is considered as a model using the following Formula (63).

$$p(y|x,w) = s_w(x,y) = \frac{\exp(w_y^T x)}{\sum_{k \in \{1...K\}} \exp(w_k^T x)} \qquad \cdots (63)$$

Here, s(x) is a K-dimensional vector of the following Formula (64), u is a K-dimensional vector in which all components are 1, and $e_k$ is a K-dimensional vector in which only the k-th component is 1 and the others are 0.

$$s_i(x) = s_w(x,i) \qquad \cdots (64)$$

Then, relations represented by the following formulas (65) and (66) are obtained.

$$\frac{\partial l_w(x,y)}{\partial w} = (e_y - s(x)) \odot x^T \qquad \cdots (65)$$

$$J_q(w,b) = -\frac{1}{MK} \sum_{j \in V} b_j \sum_k (e_k - s(x_j))(e_k - s(x_j))^T \odot x_j x_j^T \qquad \cdots (66)$$

$$\odot \qquad \cdots (67)$$

Here, the symbol represented by the Mathematical Expression 67 in Formulas (65) and (66) represents a direct product. When Formulas (65) and (66) are used, the objective function is expressed by the following Formula (68) .

$$L_{UB}(w,b) \approx \frac{1}{N} \sum_{m \in V} b_m \sum_{k \in (1...K)} \sum_{i \in V} \left( \sum_{j \in V} a_{kij} b_j \right)^{-1} \qquad \cdots (68)$$

However, variables and coefficients have been replaced as in the following Formula (69).

$$a_{kij} = \frac{(e_k - s(x_i))^T \left( I_K - s(x_j)u^T - us^T(x_j) + Ks(x_j)s^T(x_j) \right)(e_k - s(x_i))}{\left( (e_k - s(x_i))^T (e_k - s(x_i)) \right)^2} \left( \frac{x_i^T x_j}{x_i^T x_i} \right)^2$$

$$\cdots (69)$$

This problem can be transformed into a quadratic form by adding a penalty term as in the following Formula (70) .

$$L_{UB1}(w,b,\xi) = \frac{1}{N} \sum_{m \in V} b_m \sum_{k \in (1...K)} \sum_{i \in V} \xi_{ki} + \lambda \sum_{k \in (1...K)} \sum_{i \in V} \left( \xi_{ki} \sum_{j \in V} a_{kij} b_j - 1 \right)^2$$

$$\cdots (70)$$

In order to have M in a designated size, the following formula (71) may be used.

$$L_{UB1}(w,b,\xi) = \frac{M}{N} \sum_{k \in (1...K)} \sum_{i \in V} \xi_{ki} + \lambda_K \left( M - \sum_{k \in V} b_k \right)^2 + \lambda \sum_{k \in (1...K)} \sum_{i \in V} \left( \xi_{ki} \sum_{j \in V} a_{kij} b_j - 1 \right)^2$$

$$\cdots (71)$$

The objective function includes a continuous variable $\xi$ in addition to b as a variable to be optimized. $\xi$ is not optimized by the optimization machine 10 such as quantum annealing, and thus is optimized by the information processing device 100 using a normal calculation algorithm. Since the derivation is substantially the same as the regression model and the two-class classification method, detailed description thereof will be omitted.

[5. Fourth exemplary embodiment]

Here, as a fourth exemplary embodiment, an example of data selection optimization processing flow and a program will be described based on the calculation processes of the second exemplary embodiment and the third exemplary embodiment.

First, a data selection optimization processing flow performed by the information processing device 100 includes the following processes (3-1) to (3-4).

(3-1): Receiving a file of a prediction model to be trained from a user.
(3-2): Turning large-scale dataset included in the system to be in a state of being able to be handled on the server.
(3-3): When there is data from the user, merging the data to be made available.
(3-4): Resampling the optimal subset from the merged dataset.

[5-1. Main program example of information processing]

The processes (3-1) to (3-4) correspond to a main program in the program. In the main program, first, a function module that actualizes a function desired to be trained by the user is developed. Subsequently, the dataset held by the system is developed on the memory under conditions designated by the user. In addition, when there is a dataset from the user, the dataset is merged with the dataset of the system. Finally, an optimal resampling of the dataset is performed from the model and the dataset to generate a subset.

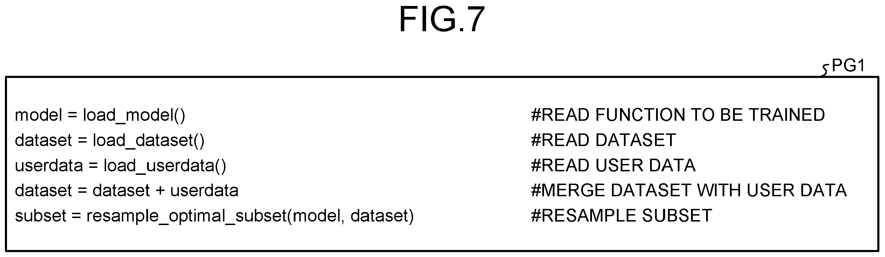

For example, the main program is a program PG1 illustrated in FIG. 7. FIG. 7 is a diagram illustrating an example of a main program of information processing. For example, the function "model = load_model ()" in the first line of the program PG1 is a function for reading a function to be trained. For example, the function "dataset = load_dataset ()" in the second line of the program PG1 is a function of reading a dataset.

For example, the function "userdata = load_userdata ()" on the third line of the program PG1 is a function that reads user data. For example, the process "dataset = dataset + userdata" in the fourth line of the program PG1 is a process of merging the dataset with the user data. For example, a function "subset = resample_optimal_subset(model, dataset)" on the fifth line of the program PG1 is a function of performing resampling of subset.

Next, an example of processing in the function that performs the resampling processing will be described.

(4-1): Randomly generating a binary variable b.
(4-2): Generating a subset S from the dataset D based on the binary variable b.
(4-3): Estimating the maximum likelihood parameter $w_S$ related to the module m using the input module m and subset S.
(4-4): Fixing the binary variable b and the parameter w of the module, and calculating the auxiliary variable (collectively referred to as X) for turning the problem into the QUBO form.
(4-5): Calculating (quadratic) coefficient matrix q of QUBO using the parameter w and the auxiliary variable X.
(4-6): Transmitting the coefficient matrix q of QUBO to the optimization machine 10, such as a quantum annealing machine, and receiving the optimized binary variable b.
(4-7): Repeating (4-2) to (4-6) to a predetermined end condition, and outputting the subset S.

Note that the setting method of the initial value of the binary variable b in (4-1) is not limited to random determination. For example, when the data quantity is designated, the initial value of the binary variable b may be set to select the data having the quantity satisfying the designated quantity.

[5-2. Example of data selection optimization processing flow]

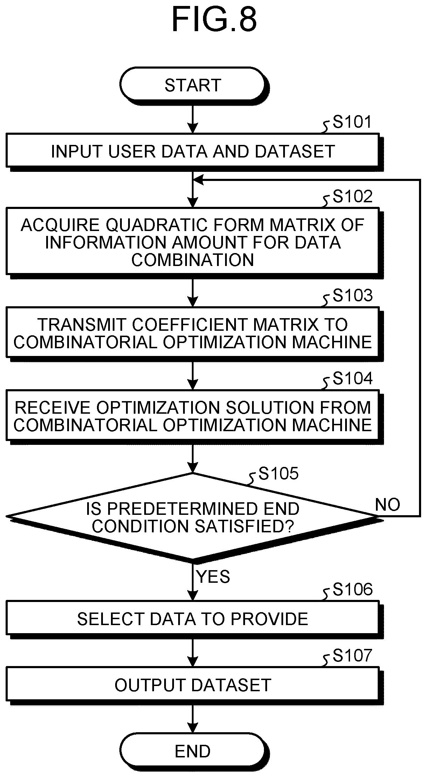

Next, a data selection optimization processing flow will be described with reference to FIG. 8. FIG. 8 is a flowchart illustrating a data selection optimization processing procedure. FIG. 8 is an example of a data selection optimization processing flow performed by the information processing system 1. Hereinafter, a case where the information processing device 100 is set as the processing subject will be described as an example. However, the processing subject is not limited to the information processing device 100, and may be any device included in the information processing system 1.

As illustrated in FIG. 8, the information processing device 100 inputs user data and a dataset (Step S101). For example, the information processing device 100 acquires user data from the terminal device 20 and acquires a dataset from the database 50.

The information processing device 100 acquires a quadratic form matrix of an information amount for a data combination (Step S102). For example, the information processing device 100 extracts a quadratic form matrix of the information amount from the objective function.

The information processing device 100 transmits the coefficient matrix to the combinatorial optimization machine (Step S103). For example, the information processing device 100 transmits the coefficient matrix as the Ising parameter to the optimization machine 10 selected by the user.

The information processing device 100 receives the optimization solution from the combinatorial optimization machine (Step S104). For example, the information processing device 100 receives a solution calculated by the optimization machine 10 as an optimization solution from the optimization machine 10 that has transmitted the Ising parameter. In this manner, the information processing system 1 obtains a combination optimized by the optimization machine 10 being a combinatorial optimization machine.

The information processing device 100 determines whether a predetermined end condition is satisfied (Step S105). For example, the end condition may be a condition that the number of times of processing reaches a threshold, or the like. In this manner, in the iterative algorithm illustrated as an example in FIG. 8, the end condition is that the number of iterations has reached a certain number or more. Note that the end condition is not limited to a condition related to the number of iterations, and may be a condition related to convergence such as a condition that the update scale by the repetition step of the energy function becomes equal to or less than a certain value, for example. Note that, since this iterative algorithm does not necessarily reduce the energy in one step, the parameter and the like at that time may be stored every time the minimum energy is achieved. In this case, the information processing device 100 may provide the user with the parameter stored as the parameter of the minimum energy when the end condition is satisfied.

In a case where the predetermined end condition is not satisfied (Step S105: No), the information processing device 100 returns to Step S102 and repeats the processing. In this manner, since the optimization is performed as alternate optimization, the information processing device 100 performs the processing as feedback processing.

In a case where the predetermined end condition is satisfied (Step S105: Yes), the information processing device 100 selects data to be provided (Step S106). For example, in a case where a predetermined end condition is satisfied, the information processing device 100 selects a subset from the dataset. Then, the information processing device 100 outputs the selected dataset (Step S107). For example, the information processing device 100 provides the selected subset to the user as a dataset.

[5-3. Example of data selection optimization processing program]

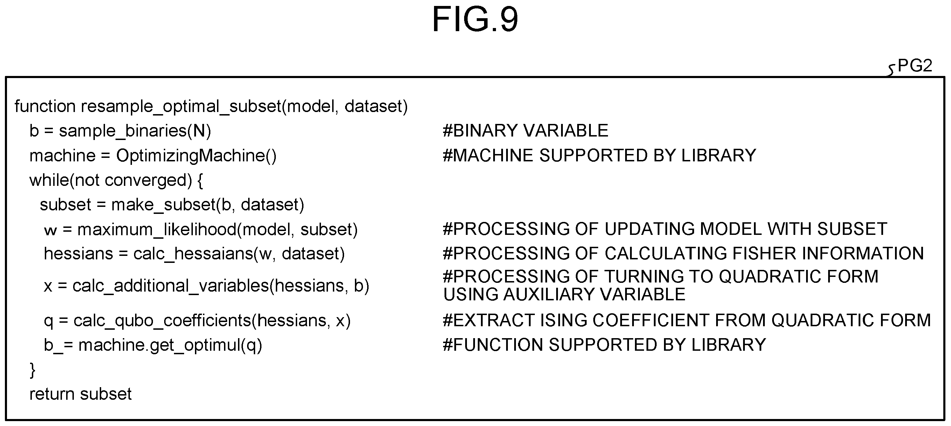

Here, an example of a program corresponding to the above-described processing will be described with reference to FIG. 9. FIG. 9 is a diagram illustrating an example of a data selection optimization processing program. The function "resample_optimal_subset(model, dataset)" illustrated in a program PG2 is a function of resampling the subset illustrated in the fifth line in FIG. 7 and corresponds to a function of outputting the subset. For example, the program PG2 illustrated in FIG. 9 represents the processing illustrated in FIG. 8 as a program example. Since the program PG2 illustrated in FIG. 9 is similar to the processing illustrated in FIG. 8, detailed description thereof will be omitted.

For example, the function "w = maximum _likelihood(model, subset)" in the sixth line of the program PG2 is a function of performing processing of updating the model parameters using the subset. For example, a function "hessians = calc_hessaians(w, dataset)" on the seventh line of the program PG2 is processing of calculating an information amount from the model parameters. For example, the function "x = calc_additional_variables(hessians, b)" on the eighth line of the program PG2 is processing of preparing an auxiliary variable for converting an expression that is not in the quadratic form into the quadratic form. For example, the function "q = calc_qubo_coefficients(hessians, x)" on the ninth line of the program PG2 is a function for extracting the Ising coefficient from the quadratic form. For example, a function "b_= machine.get_optimul(q)" on the tenth line of the program PG2 is a function of outputting the binary variable b with the coefficient matrix q of QUBO as an input.

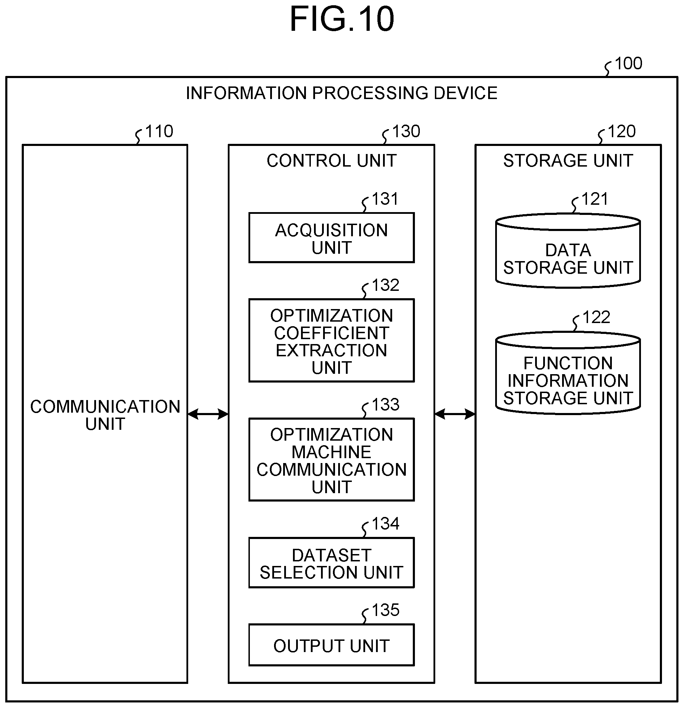

For example, the information processing device 100 stores a program (function) as illustrated in FIGS. 7 and 9 and a program (function) called by each program in a function information storage unit 122 (refer to FIG. 10), and executes processing using each program.

As described above, the information processing device 100 extracts the coefficient matrix as the Ising parameter to be transmitted to the optimization machine 10 from the objective function related to the information amount determined according to the task of the model. For example, the information processing device 100 extracts the coefficient matrix using the above-described program or the like. For example, the coefficient matrix is an array including coefficients related to primary or higher terms of a variable to be optimized extracted from the objective function. Subsequently, the information processing device 100 uses the extracted coefficient matrix to set the inter-spin coupling constant and the local magnetic field of the optimization machine 10. The information processing device 100 transmits the extracted coefficient matrix to the optimization machine 10. Next, the optimization machine 10 performs annealing processing, calculates a combination of basis spins of the Ising model, and transmits the result to the information processing device 100. The information processing device 100 receives the combination of the basis spins of the Ising model calculated by the optimization machine 10 as a calculation result, and selects a subset from the dataset based on the calculation result received.

[6. Configuration of information processing device]

Next, the configuration of the information processing device 100 will be described. FIG. 10 is a diagram illustrating a configuration example of an information processing device of the present disclosure.

As illustrated in FIG. 10, the information processing device 100 includes a communication unit 110, a storage unit 120, and a control unit 130. The information processing device 100 may include an input unit (for example, a keyboard, a mouse, etc.) that receives various operations from an administrator or the like of the information processing device 100, and a display unit (for example, a liquid crystal display, etc.) for displaying various types of information.

The communication unit 110 is implemented by a network interface card (NIC), for example. The communication unit 110 is connected to a predetermined network (not illustrated) in a wired or wireless channel, and transmits and receives information to and from the optimization machine 10, the terminal device 20, the database 50, and the like. Furthermore, the communication unit 110 may transmit and receive information to and from a user terminal (not illustrated) used by the user.

The storage unit 120 is implemented by semiconductor memory elements such as random access memory (RAM) and flash memory, or other storage devices such as a hard disk or an optical disc. As illustrated in FIG. 10, the storage unit 120 according to the first exemplary embodiment includes a data storage unit 121 and a function information storage unit 122.

The data storage unit 121 stores various data such as data received from the terminal device 20 and the database 50. The function information storage unit 122 stores information of functions such as various programs. For example, the function information storage unit 122 stores information of various functions (programs) used for information processing according to the present disclosure. For example, the function information storage unit 122 stores a function program such as the programs PG1 and PG2. In addition, the function information storage unit 122 may store information of a function used for processing among the above-described formulas. Note that the storage unit 120 is not limited to the above, and may store various types of information depending on the purpose.

The control unit 130 is actualized by execution of programs stored in the information processing device 100 (for example, information processing program according to the present disclosure, or the like) by a CPU, a micro processing unit (MPU), or the like, using Random Access Memory (RAM) or the like, as a work area. Furthermore, the control unit 130 is implemented by, for example, an integrated circuit such as an application specific integrated circuit (ASIC) or an FPGA.

As illustrated in FIG. 10, the control unit 130 includes an acquisition unit 131, an optimization coefficient extraction unit 132, an optimization machine communication unit 133, a dataset selection unit 134, and an output unit 135, and implements or executes a function and an action of information processing described below. The internal configuration of the control unit 130 is not limited to the configuration illustrated in FIG. 10, and may be any other configuration as long as it is a configuration that performs information processing described below.

The acquisition unit 131 has functions of the data reading unit 131a and the user data input unit 131b. The acquisition unit 131 acquires various types of information. The acquisition unit 131 acquires the information stored in the storage unit 120. The acquisition unit 131 acquires a dataset.

The acquisition unit 131 acquires a task corresponding to the model to be trained. For example, the acquisition unit 131 acquires information indicating a model that the user desires to train from the terminal device 20 used by the user. The acquisition unit 131 acquires information indicating a task of a model desired to be trained by the user from the terminal device 20 used by the user. For example, the acquisition unit 131 acquires a task corresponding to the model to be trained from the storage unit 120. The acquisition unit 131 acquires information regarding a model that the user desires to train. For example, the acquisition unit 131 acquires, from the storage unit 120 in which a task is stored in association with each model, information indicating a task corresponding to a model that the user desires to train.

The acquisition unit 131 acquires designation information related to the size and category of the sample set used for training the model. For example, the acquisition unit 131 acquires designation information related to the data quantity used for training the model. For example, the acquisition unit 131 acquires designation information that designates the data quantity used for training the model from the terminal device 20 used by the user. For example, the acquisition unit 131 acquires designation information that designates the data quantity to be selected as the subset from the terminal device 20 used by the user.

For example, in a case where the user does not designate the data quantity, the acquisition unit 131 acquires designation information designating selection of the smallest possible data quantity. For example, in a case where the user does not designate the data quantity, the acquisition unit 131 acquires designation information designating a predetermined quantity (for example, an initial setting quantity). For example, in a case where the user does not designate the data quantity, the acquisition unit 131 acquires designation information for designating a predetermined quantity (for example, an initial setting quantity) stored in the storage unit 120.

The acquisition unit 131 receives various types of information via the communication unit 110. The acquisition unit 131 receives various types of information from an external information processing device. The acquisition unit 131 receives data from the terminal device 20 and the database 50.

The optimization coefficient extraction unit 132 is an extraction unit that performs information extraction processing. The optimization coefficient extraction unit 132 extracts a coefficient matrix corresponding to the input of the optimization machine 10 from the objective function. The optimization coefficient extraction unit 132 extracts a coefficient matrix. The optimization coefficient extraction unit 132 extracts a coefficient matrix corresponding to the Ising coefficient from the objective function. The optimization coefficient extraction unit 132 extracts a coefficient matrix from an objective function indicating an information gain corresponding to the task. The optimization coefficient extraction unit 132 extracts a coefficient matrix from the objective function related to the Kullback-Leibler divergence. The optimization coefficient extraction unit 132 extracts a coefficient matrix from an objective function expressed as an energy function of the Ising model. The optimization coefficient extraction unit 132 extracts a coefficient matrix from the objective function expressed in the QUBO format. For example, in a case where the model that the user desires to train is a regression model and the data quantity is not designated, the optimization coefficient extraction unit 132 extracts a coefficient matrix from an objective function as illustrated in Formula (50). Furthermore, in a case where the model that the user desires to train is a regression model and the data quantity is designated, the optimization coefficient extraction unit 132 extracts a coefficient matrix from an objective function as illustrated in Formula (51) .

For example, in a case where the model that the user desires to train is a two-class classification model and the data quantity is not designated, the optimization coefficient extraction unit 132 extracts a coefficient matrix from the objective function as illustrated in Formula (60). Furthermore, in a case where the model that the user desires to train is a two-class classification model and the data quantity is designated, the optimization coefficient extraction unit 132 extracts a coefficient matrix from the objective function as illustrated in Formula (61). For example, in a case where the model that the user desires to train is a multi-class classification model and the data quantity is not designated, the optimization coefficient extraction unit 132 extracts a coefficient matrix from an objective function as illustrated in Formula (70). Furthermore, in a case where the model that the user desires to train is a multi-class classification model and the data quantity is designated, the optimization coefficient extraction unit 132 extracts a coefficient matrix from the objective function as illustrated in Formula (71). Note that the optimization coefficient extraction unit 132 may extract a parameter corresponding to a model that the user desires to train. For example, the optimization coefficient extraction unit 132 extracts the parameter w to be set to the objective function from the model that the user desires to train. For example, the optimization coefficient extraction unit 132 acquires a parameter corresponding to the model to be trained from the storage unit 120. For example, the optimization coefficient extraction unit 132 acquires information indicating a parameter corresponding to a model that the user desires to train from the storage unit 120 in which the parameter is stored in association with each model.

The optimization coefficient extraction unit 132 performs optimization of the parameters based on the calculation result received by the optimization machine communication unit 133 from the optimization machine 10. For example, the optimization coefficient extraction unit 132 perform optimization of parameters other than the parameters that undergo optimization by the optimization machine 10. For example, the optimization coefficient extraction unit 132 fixes the binary variable $b_i$ based on the calculation result of the optimization machine 10, and updates $\xi$ with a normal calculation algorithm. For example, in a case where the model that the user desires to train is a regression model, the optimization coefficient extraction unit 132 calculates the optimum value of $\xi$ using Formulas (52) and (53). For example, in a case where the model that the user desires to train is a two-class classification model, the optimization coefficient extraction unit 132 calculates the optimum value of $\xi$ using Formula (62) or the like. For example, the optimization coefficient extraction unit 132 similarly calculates the optimum value of $\xi$ also in a case where the model that the user desires to train is a multi-class classification model.

The optimization machine communication unit 133 communicates with the optimization machine 10 via the communication unit 110, and transmits and receives information to and from the optimization machine 10. The optimization machine communication unit 133 instructs the optimization machine 10 to execute calculation. The optimization machine communication unit 133 transmits the parameters of the Ising model to the optimization machine 10. The optimization machine communication unit 133 transmits the parameters of the Ising model to the optimization machine 10 to instruct the optimization machine 10 to execute calculation. The optimization machine communication unit 133 transmits the coefficient matrix extracted by the optimization coefficient extraction unit 132 to the optimization machine 10 that performs combinatorial optimization calculation.

The optimization machine communication unit 133 receives various types of information from the optimization machine 10. The optimization machine communication unit 133 receives the calculation result of the optimization machine 10 from the optimization machine 10.

The optimization machine communication unit 133 transmits the coefficient matrix corresponding to the objective function to the optimization machine 10 that performs combinatorial optimization calculation. The optimization machine communication unit 133 receives the calculation result of the combinatorial optimization calculation from the optimization machine 10. The optimization machine communication unit 133 receives, from the optimization machine 10, a calculation result indicating the variable after the combinatorial optimization calculation. The optimization machine communication unit 133 receives, from the optimization machine 10, a calculation result related to binary variables each corresponding to data.

The optimization machine communication unit 133 transmits the coefficient matrix to the optimization machine 10 which is a quantum computer or a combinatorial optimization accelerator. The optimization machine communication unit 133 transmits the coefficient matrix to the optimization machine 10 selected by the user among the plurality of optimization machines 10.

The dataset selection unit 134 is a selection unit that performs selection processing of a sample set such as a dataset. The dataset selection unit 134 selects a subset to be used for the training of the model from the dataset based on the objective function regarding the information amount determined according to the task and the number determined using the designation information. The dataset selection unit 134 selects a sample set so as to optimize an objective function indicating information entropy provided to the model. The dataset selection unit 134 selects a subset based on the objective function indicating the information gain according to the task.

The dataset selection unit 134 selects a subset based on the objective function related to the Kullback-Leibler divergence. The dataset selection unit 134 selects a subset based on an objective function expressed as an energy function of the Ising model. The dataset selection unit 134 selects a subset based on the objective function expressed in the QUBO format. The dataset selection unit 134 selects a subset based on the calculation result of the optimization machine 10 acquired from the optimization machine 10.

For example, based on the calculation result of the optimization machine 10, the dataset selection unit 134 selects data having 1 as the binary variable $b_i$ corresponding to the data, as data to be added to the subset. In addition, based on the calculation result of the optimization machine 10, the dataset selection unit 134 does not add, to the subset, the data having 0 as the binary variable $b_i$ corresponding to the data. In this manner, the dataset selection unit 134 generates a subset including data having 1 as the binary variable $b_i$ according to the value of the binary variable $b_i$ based on the calculation result of the optimization machine 10.

The output unit 135 performs information output processing. The output unit 135 outputs information related to the sample selected by the dataset selection unit 134. For example, the output unit 135 outputs information related to the subset. The output unit 135 transmits various types of information via the communication unit 110. The output unit 135 transmits the sample set. The output unit 135 transmits the subset as a sample set to the terminal device 20 used by the user.

Furthermore, the output unit 135 may transmit the trained model, which has been trained using the sample set such as the subset, to the terminal device 20 used by the user. In this case, the information processing device 100 may include a training unit that trains a model. The training unit of the information processing device 100 trains the trained model by using the subset.

Furthermore, the information processing device 100 may acquire a trained model trained by using the subset from an external device (referred to as a "training device") that executes training processing of training the model. In this case, the information processing device 100 may transmit the subset to the training device and receive, from the training device, the trained model that has been trained by the training device through the training processing. Subsequently, the information processing device 100 transmits the trained model received from the training device to the terminal device 20.

The information processing device 100 may include a content generation unit that generates various types of content such as the content CT1. The content generation unit generates content to be provided to the terminal device 20. The content generation unit generates content by appropriately using various technologies such as Java (registered trademark). Note that the content generation unit may generate the content CT1 or the like based on a format such as CSS, JavaScript (registered trademark), or HTML. Furthermore, for example, the content generation unit may generate the content CT1 or the like in various formats such as joint photographic experts group (JPEG), graphics interchange format (GIF), and portable network graphics (PNG).

[7. Configuration of optimization machine]

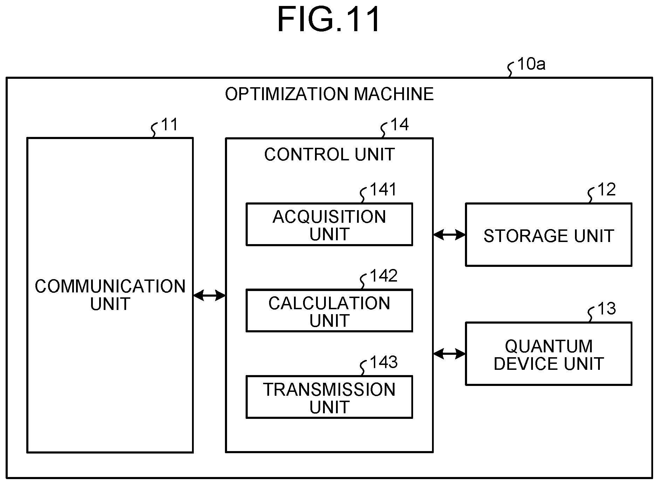

Next, a configuration of the optimization machine 10 that executes calculation will be described. FIG. 11 is a diagram illustrating a configuration example of the optimization machine. In the example of FIG. 11, a configuration of an optimization machine 10a being a quantum computer will be described as an example of the optimization machine 10.

As illustrated in FIG. 11, the optimization machine 10a includes a communication unit 11, a storage unit 12, a quantum device unit 13, and a control unit 14. Note that, the optimization machine 10a may include an input unit (for example, a keyboard, a mouse, etc.) that receives various operations from an administrator or the like of the optimization machine 10a, and a display unit (for example, a liquid crystal display, etc.) for displaying various types of information.

The communication unit 11 is implemented by, for example, an NIC, a communication circuit, or the like. The communication unit 11 is connected to a predetermined network (the Internet, or the like) via a wired or wireless channel, and transmits and receives information to and from another device such as the information processing device 100 via the network.

The storage unit 12 is implemented by a semiconductor memory element such as RAM or flash memory, or a storage device such as a hard disk or an optical disk, for example. The storage unit 12 stores various types of information used for displaying information.

The quantum device unit 13 executes various quantum calculations. For example, the quantum device unit 13 is implemented by a Quantum Processing Unit (QPU). The quantum device unit 13 implements the ground state of the Ising model based on the parameter of the Ising model received from another device such as the information processing device 100, for example. In other words, the quantum device unit 13 implements the optimal spin arrangement in which the Ising model is in the ground energy state. That is, the quantum device unit 13 implements a state in which the optimization problem is optimized.

The quantum device unit 13 includes a plurality of quantum bits, for example. The quantum device unit 13 is pre-cooled to near absolute zero. After the parameters of the Ising model are input to the quantum device unit 13, the quantum device unit 13 applies time evolution on the ratio between the Ising model and the transverse model (quantum fluctuation model). With this operation, optimal spin arrangement according to the parameters of the Ising model is implemented on the quantum device unit 13. In this manner, the optimal spin arrangement of the Ising model is physically implemented on the quantum device unit 13. By measurement of the quantum device unit 13, the optimal spin arrangement of the Ising model can be obtained. With this operation, the quantum device unit 13 can optimize the discrete optimization problem. For example, the quantum device unit 13 can optimize an optimization problem of an objective function of a binary quadratic form.

The control unit 14 is implemented by execution of a program stored in the optimization machine 10a by the CPU, MPU, or the like, with RAM or the like used as a work area. Furthermore, the control unit 14 may be a controller and may be implemented by using an integrated circuit such as an ASIC or an FPGA, for example.

As illustrated in FIG. 11, the control unit 14 includes an acquisition unit 141, a calculation unit 142, and a transmission unit 143, and implements or executes a function and an action of information processing described below. The internal configuration of the control unit 14 is not limited to the configuration illustrated in FIG. 11, and may be any other configuration as long as it is a configuration that performs information processing described below.

The acquisition unit 141 receives various types of information. The acquisition unit 141 receives various types of information from an external information processing device. The acquisition unit 141 receives various types of information from another information processing device such as the information processing device 100.

The acquisition unit 141 performs calculation using the quantum device unit 13, for example, and receives an instruction for measurement from another information processing device such as the information processing device 100. The acquisition unit 141 receives parameters of the Ising model as an instruction of calculation (measurement) by the quantum device unit 13.

The acquisition unit 141 acquires various types of information. The acquisition unit 141 acquires various types of information from the storage unit 12. The acquisition unit 141 acquires various types of information from an external information processing device such as the information processing device 100. The acquisition unit 141 acquires the input information received by the input unit. The acquisition unit 141 acquires, for example, information related to a parameter of the Ising model from an external information processing device. The acquisition unit 141 acquires a measurement result (calculation result) of the quantum device unit 13 by the calculation unit 142.

For example, the acquisition unit 141 receives the coefficient matrix q of QUBO, which is the processing result of the function "q = calc_qubo_coefficients(hessians, x)" of the program PG2, from the information processing device 100.

The calculation unit 142 executes various calculations. The calculation unit 142 executes calculation using the quantum device unit 13. The calculation unit 142 measures the quantum device unit 13. The calculation unit 142 measures the quantum device unit 13 in which the optimal spin arrangement of the Ising model is implemented.

For example, the calculation unit 142 executes calculation using the Ising parameter received by the acquisition unit 141 from the information processing device 100.

The transmission unit 143 transmits various types of information to an external information processing device. For example, the transmission unit 143 transmits various types of information to another information processing device such as the information processing device 100. The transmission unit 143 transmits the information stored in the storage unit 12.

The transmission unit 143 transmits various types of information based on information from another information processing device such as the information processing device 100. The transmission unit 143 transmits various types of information based on the information stored in the storage unit 12.

The transmission unit 143 transmits the measurement result of the quantum device unit 13 obtained by the calculation unit 142 to the device that has instructed the calculation. The transmission unit 143 transmits the measurement result of the quantum device unit 13 obtained by the calculation unit 142 to the transmission source of the parameter. The transmission unit 143 transmits the measurement result of the quantum device unit 13 by the calculation unit 142 to the calculation request source. The transmission unit 143 transmits the measurement result of the quantum device unit 13 obtained by the calculation unit 142 to another information processing device such as the information processing device 100.

For example, in the example of FIG. 1, the transmission unit 143 transmits the value of the Ising spin calculated (measured) using the parameter received from the information processing device 100 to the information processing device 100.

[8. Example of presentation to user]

Here, an example of presentation of various types of information to the user in the information processing system 1 will be described below. For example, the information processing device 100 provides various types of information to the terminal device 20 in response to a request from the terminal device 20.

[8-1. List of classes]

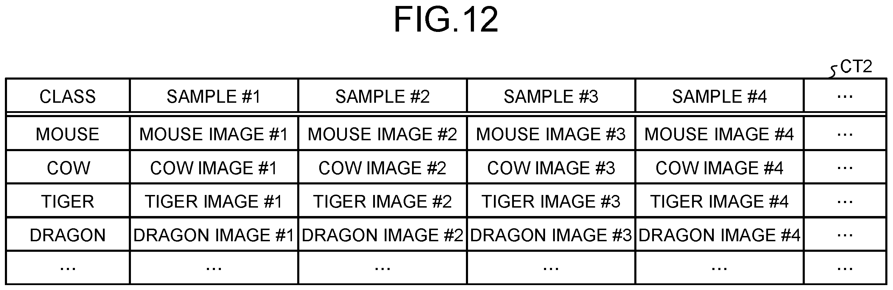

For example, in a case where the terminal device 20 requests a dataset of a class and a task handled by the information processing device 100, the information processing device 100 may disclose a list of the handled classes. The information processing device 100 may provide content CT2 as illustrated in FIG. 12 to the terminal device 20. FIG. 12 is a diagram illustrating an example of a list of classes. The content CT2 illustrated in FIG. 12 illustrates a list of sample images of each of a plurality of classes such as "mouse", "cow", "tiger", and "dragon".

[8-2. Selection of class]

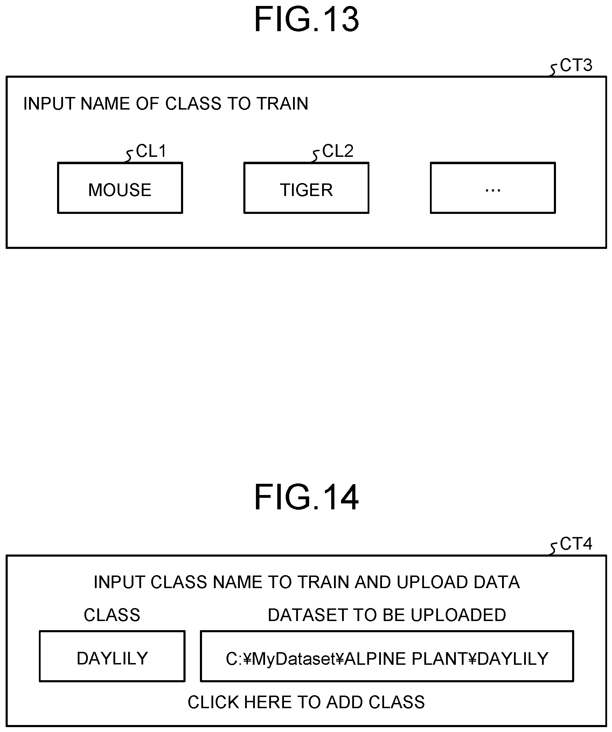

For example, the information processing device 100 may receive selection of a class that the user desires to train from the terminal device 20. The information processing device 100 may provide content CT3 as illustrated in FIG. 13 to the terminal device 20 and may receive the selection of the class of the user via the content CT3. FIG. 13 is a diagram illustrating an example of selection of a class that the user desires to train. The content CT3 illustrated in FIG. 13 is content for receiving user's selection for the class CL1 corresponding to "mouse", the class CL2 corresponding to "cow", and the like. The information processing device 100 receives information indicating which of the classes is selected by the user from the terminal device 20. For example, the user may set the request type to "all known" when all the classes are known.

[8-3. Reception of data]

The information processing device 100 may request the terminal device 20 for data (negative data) suitable for a class or task that is not handled. The information processing device 100 receives data of a class and a task desired to be handled by the terminal device 20 from the terminal device 20. The information processing device 100 may provide content CT4 as illustrated in FIG. 14 to the terminal device 20 and receive data from the user via the content CT4. FIG. 14 is a diagram illustrating an example of reception of data from a user. The content CT4 illustrated in FIG. 14 indicates an example of a case where data of a class "daylily" is received.

Note that the information processing device 100 may check whether there is a class similar to the class or the dataset, and may notify the user of a case where there is a similar class or dataset. For example, in a case where there is a class similar to the class, the information processing device 100 may transmit a message "Could it be that it belongs to this class?" to the terminal device 20 used by the user. The terminal device 20 outputs the received message. Then, when it is confirmed that the class is new, the information processing device 100 may shift to the actual optimal training data selection processing.

[9. Application example]

The information processing system 1 described above may be used for various purposes such as classification of a specific domain. In this regard, some examples will be described below. Note that a target to which the information processing system 1 is applied is not limited to the following example.

[9-1. Fifth exemplary embodiment (image classification)]

Hereinafter, as a fifth exemplary embodiment illustrating an application example of the information processing system 1, a case where the information processing system 1 is applied to two-class discrimination being inside/outside discrimination of genus of an animal will be described. Although the fifth exemplary embodiment is an example of two-class discrimination being inside/outside discrimination related to the genus of the animal, it is also allowable to use, as described above, animal type class classification of using another type of class classification. Furthermore, it may be an image classification of alpine plants rather than animals. The data is not necessarily an image, and may be audio data. For example, the classification may be based on the cicadas or the chirping of wild birds. Another example of a regression problem may be a price classification of real estate.

For example, there is a case where it is desired to accurately classify a class comprehensively selected in a specific domain rather than roughly classify a large number of classes randomly selected across domains. For example, the former is a concept adapted to the machine learning industry such as ImageNet classification, and the latter is a concept adapted to business and individual users. In addition, examples of business include Web services such as picture books. Furthermore, as an example for an individual user, for example, there is a general user who desires to collect a picture or voice of a wild bird and create an original recognition module.

It is assumed that an object in the fifth exemplary embodiment is generation of a Genus Macaca image classifier (hereinafter also simply referred to as "classifier") that performs image classification of Genus Macaca in an animal classification diagram. However, it is also desired to accurately perform discrimination of a species other than the Genus Macaca when the species other than the Genus Macaca is input to the classifier.

Preconditions in the fifth exemplary embodiment include the following points.

· Only the Family Cercopithecidae is to be input.
· Sufficient number of images have been collected in every class of Genus Macaca
· Other than the Genus Macaca, there is no data of the Family Cercopithecidae
· Since training can be performed on a client side, only the dataset is to be obtained from the server.
· The server side stores a large number of data of all classes of the animal kingdom classification diagram.
· The server side includes a general-purpose image feature extractor.

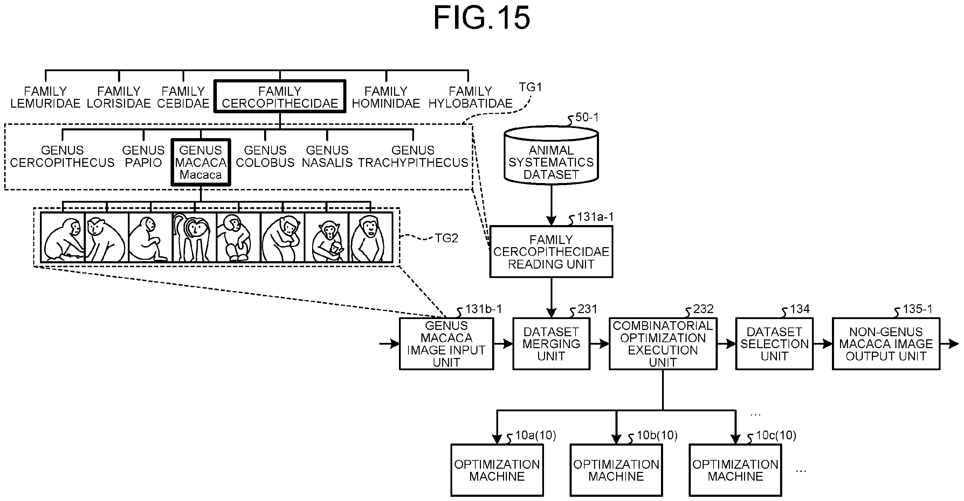

Hereinafter, an example of an implement configuration of the fifth exemplary embodiment will be described with reference to FIG. 15. FIG. 15 is a diagram illustrating a fifth exemplary embodiment to which the information processing system is applied. Note that description of the points similar to those described above will be omitted as appropriate. First, each component illustrated in FIG. 15 will be described.

An animal systematics dataset 50-1 is an image dataset of an animal. The animal systematics dataset 50-1 corresponds to the database 50 described above. For example, the animal systematics dataset 50-1 is a huge dataset including 100 images for each of all classes of the animal kingdom.

A Family Cercopithecidae reading unit 131a-1 has a function of acquiring data of Family Cercopithecidae. The Family Cercopithecidae reading unit 131a-1 corresponds to the data reading unit 131a described above. For example, the Family Cercopithecidae reading unit 131a-1 is a module that reads all data of all classes of the Macaca fascicularis. The Family Cercopithecidae reading unit 131a-1 acquires data of Family Cercopithecidae from the animal systematics dataset 50-1. For example, as illustrated in a first target group TG1 in FIG. 15, a Family Cercopithecidae reading unit 131a-1 acquires image data of each genus belonging to the Family Cercopithecidae, such as Genus Cercopithecus, Genus Papio, Genus Macaca, Genus Colobus, Genus Nasalis, and Genus Trachypithecus.

A Genus Macaca image input unit 131b-1 has a function of acquiring data of the Genus Macaca. The Genus Macaca image input unit 131b-1 corresponds to the user data input unit 131b described above. For example, the Genus Macaca image input unit 131b-1 acquires 100 datasets for each of all classes of the Genus Macaca prepared by the client (also referred to as "user") side. For example, as illustrated in a second target group TG2 in FIG. 15, the Genus Macaca image input unit 131b-1 acquires image data of each of a plurality of classes belonging to the Genus Macaca

A dataset merging unit 231 has a function of merging a Family Cercopithecidae image (other than the Genus Macaca) and a Genus Macaca image that has been input. The dataset merging unit 231 merges a first image group acquired by the Family Cercopithecidae reading unit 131a-1 and a second image group acquired by the Genus Macaca image input unit 131b-1 to generate a third image group.

A combinatorial optimization execution unit 232 has a function of executing combinatorial optimization processing based on merged data. The combinatorial optimization execution unit 232 corresponds to the optimization coefficient extraction unit 132 and the optimization machine communication unit 133. The combinatorial optimization execution unit 232 extracts a coefficient matrix, transmits the extracted coefficient matrix to the optimization machine 10, and receives a calculation result from the optimization machine 10.

The dataset selection unit 134 in FIG. 15 corresponds to the dataset selection unit 134 described above. The dataset selection unit 134 has a function of selecting optimum data based on a result of combinatorial optimization processing performed by the combinatorial optimization execution unit 232. The dataset selection unit 134 selects a subset from the merged data based on the result of the combinatorial optimization processing performed by the combinatorial optimization execution unit 232.

A non-Genus Macaca image output unit 135-1 has a function of outputting a dataset of non-Genus Macaca selected from the Family Cercopithecidae set. The non-Genus Macaca image output unit 135-1 corresponds to the output unit 135 described above. For example, the non-Genus Macaca image output unit 135-1 outputs data other than the Genus Macaca in the selected subset. For example, the non-Genus Macaca image output unit 135-1 outputs the image data included in the first image group among the selected subset as image data other than Genus Macaca.

The optimization machine 10 corresponds to the optimization machine 10 described above. The optimization machine 10 inputs the coefficient matrix (QUBO matrix) created by the combinatorial optimization execution unit 232, and outputs a combination result.

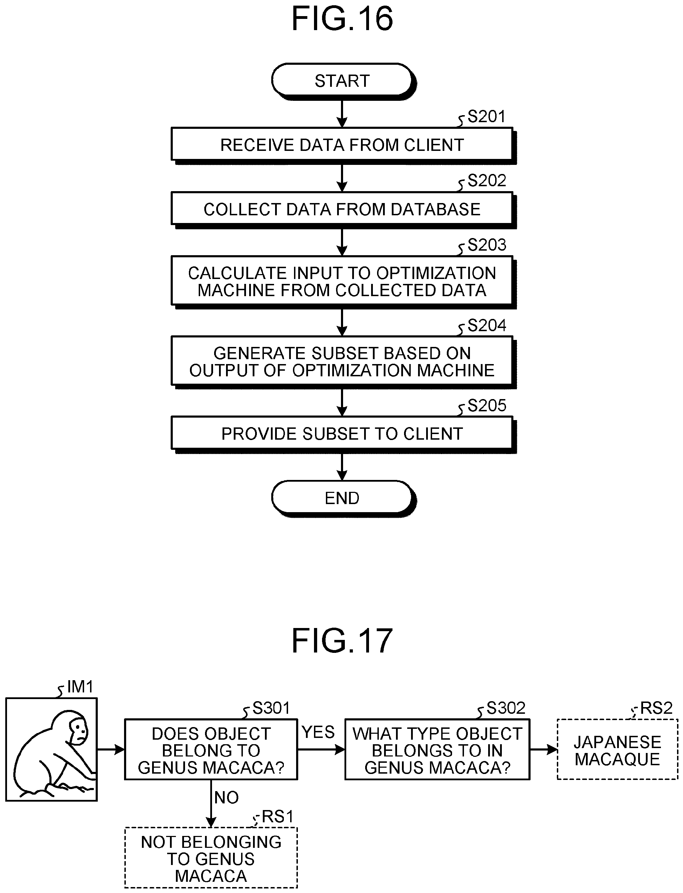

Next, an example of a processing flow will be described with reference to FIG. 16. FIG. 16 is a flowchart illustrating a procedure of processing in a fifth exemplary embodiment. FIG. 16 is an example of a processing flow in the fifth exemplary embodiment performed by the information processing system 1. Hereinafter, a case where the information processing device 100 is set as the processing subject will be described as an example. However, the processing subject is not limited to the information processing device 100, and may be any device included in the information processing system 1.

As illustrated in FIG. 16, the information processing device 100 receives data from the client (Step S201). For example, the information processing device 100 acquires data from the terminal device 20 used by the user. For example, the information processing device 100 receives various types of information from the client. For example, the information processing device 100 acquires information indicating a desired domain for data acquisition, such as Family Cercopithecidae. Furthermore, for example, the information processing device 100 acquires information indicating a class already on the client side, such as a class in the Genus Macaca. Furthermore, for example, the information processing device 100 acquires a dataset already on the client side.

The information processing device 100 collects data from the database (Step S202). For example, the information processing device 100 acquires necessary data from the database 50 such as the animal systematics dataset 50-1. For example, the information processing device 100 collects necessary data from the database 50 including an animal image set and the like. In addition, for example, the information processing device 100 acquires a dataset excluding a positive class such as a class in the Genus Macaca among the domain (Family Cercopithecidae) designated by the client.

The information processing device 100 calculates an input to the optimization machine based on the collected data (Step S203). For example, the information processing device 100 calculates a coefficient matrix based on the collected data as an input to the optimization machine 10.

The information processing device 100 generates a subset based on the output of the optimization machine (Step S204). For example, the information processing device 100 transmits the coefficient matrix to the optimization machine 10, and receives the calculation result calculated by the optimization machine 10 from the optimization machine 10. For example, the information processing device 100 selects a subset from the collected data based on the calculation result of the optimization machine 10. In this manner, the information processing device 100 selects an optimal subset from the dataset. The optimal subset is qualitatively, for example, a combination of data that is similar to the input data and is not similar to each other.

For example, the information processing device 100 selects a subset by the following procedure. First, the information processing device 100 generates a feature set from a dataset by an existing feature extractor. The information processing device 100 then generates input data to the optimization machine 10 from the feature set. Here, the input data is, for example, a coefficient matrix in the binary quadratic form formulation of the information amount gain. Subsequently, the information processing device 100 acquires information indicating the data combination that maximizes the information amount gain from the optimization machine 10. The information processing device 100 selects a subset based on the acquired information indicating the combination.

The information processing device 100 provides the subset to the client (Step S205). For example, the information processing device 100 presents the subset to the client side. For example, the information processing device 100 transmits the subset to the terminal device 20 used by the user.

An overall scenario based on the processing in the fifth exemplary embodiment described above is as follows.

The client collects data of a class to be classified. For example, the client collects image data of several types in Genus Macaca.

In addition, the client transmits the class data to the information processing device 100 and requests provision of the out-of-class data. The client designates a domain (Family Cercopithecidae) on a browser or the like presented by the information processing device 100. The client designates the collected class (such as the species within the Genus Macaca) instead of the class desired to be provided.

The client receives the out-of-class data. For example, the terminal device 20 used by the user receives data from the information processing device 100. The client also utilizes the out-of-class data to obtain discriminators for inside/outside discrimination. The client trains the discriminator with the collected class data and the provided out-of-class data. For example, the terminal device 20 used by the user trains the discriminator (model) by using data held by the terminal device and data received from the information processing device 100.

The client enables utilization of the trained discriminator in combination with the class classifier trained with the collected class data. For example, the terminal device 20 used by the user performs first processing, which is processing of discriminating whether an image is an image of the Genus Macaca using a discriminator, and performs second processing, which is processing of classifying the type of the Genus Macaca included in the image using a classifier on the image discriminated as the Genus Macaca in the first processing.

This point will be described with reference to FIG. 17. FIG. 17 is a diagram illustrating a flow of image determination processing. Hereinafter, a case where the terminal device 20 is set as the processing subject will be described as an example. However, the processing subject is not limited to the terminal device 20, and may be any device included in the information processing system 1.

First, the terminal device 20 performs processing of discriminating whether an image IM1 to be processed is an image of the Genus Macaca (Step S301). For example, the terminal device 20 inputs the image IM1 to the discriminator, and discriminates whether the image IM1 is an image of the Genus Macaca based on an output result of the discriminator.

In a case where it is determined in the first processing that the image IM1 is not an image of the Genus Macaca, the terminal device 20 ends the processing without performing the second processing. For example, in a case where it is determined in the first processing that the image IM1 is not an image of the Genus Macaca, the terminal device 20 outputs a result RS1 indicating that the image IM1 is not an image of the Genus Macaca, and ends the processing.

In contrast, in a case where it is determined in the first processing that the image IM1 is an image of the Genus Macaca, the terminal device 20 performs processing of further classifying as to what type in the Genus Macaca the object included in the image IM1 belongs to (Step S302). For example, the terminal device 20 inputs the image IM1 to the classifier, and classifies the type of the object included in the image IM1 in the Genus Macaca based on the output result of the classifier. In FIG. 17, the terminal device 20 outputs a result RS2 indicating that the object included in the image IM1 is a Japanese macaque in the Genus Macaca, and ends the processing.

[9-2. Sixth exemplary embodiment (biomolecule)]

For example, when labeling of machine learning is regarded as measurement evaluation in various scientific experiments, there is a great significance in improvement in efficiency by active learning that provides a guideline on which sample of a large number of examination targets should be evaluated.

For example, the band gap of a semiconductor is an important physical quantity that determines characteristics of various functions of a semiconductor. However, similarly to labeling in machine learning, measurement of a band gap requires cost of time and effort on experts in the field, and thus it is desired to select a sample to be measured as efficiently as possible. Similarly, the magnetic susceptibility of the magnetic body, the dielectric constant of the dielectric body, and the like are also important physical quantities that determine the characteristics of each function. However, the measurement would require a special measuring instrument. This applies to a functional material formed of an organic compound or the like as well as an inorganic compound.

In view of these, the following will describe an example of a biomolecule, in particular, a genetic test, as a sixth exemplary embodiment presenting an application example of the information processing system 1.

First, a biomolecule is generally represented by a substance such as a protein or Ribonucleic Acid (RNA)), Deoxyribonucleic Acid (DNA). It is known that any of these biomolecule is a polymer composed of a one-dimensional sequence of a basic molecular structure, and various macroscopic functions of an organism based on each biomolecule are known to be determined by a sequence pattern in a determined region of the one-dimensional sequence.

In addition, proteins are known as basic biomolecules for constituting the body and structure of an organism. Any protein, among a large number of types of proteins in the world, is obtained by arranging twenty (or twenty-one) types of amino acids in a one-dimensional sequence with a length of several thousand to several hundred million. There are a large number of known proteins having unique functions according to a pattern of a predetermined region of this sequence.

The unique function of a protein is, for example, to activate an enzyme (enzyme), to form a biological structure (for example, collagen or keratin), to transport lipids, cholesterol, and the like (e.g. albumin, apolipoprotein), to store nutrients and ions (e.g. ovalbumin, ferritin, hemosiderin), to constitute a muscle to work on physical activities (e.g. actin and myosin), to work on an immune function referred to as an antibody (for example, globulin), to work on an expression function of synthesizing a protein based on DNA information, and to adjust the function of other proteins (for example, calmodulin).

Similarly, the molecules are known to be biological molecules constituting main substance of a gene, such as ribonucleic acid (RNA) and deoxyribonucleic acid (DNA), and the internal substance is a biomolecule in which information for synthesizing a protein is coded on a one-dimensional sequence. Similarly to proteins, RNA and DNA are also formed with basic unit sequences, and both are polymers in which deoxynucleotides formed by binding a nucleic acid and any one of four types of bases (Adenine (A), guanine (G), cytosine (C), and thymine (T)) to deoxyribose (five-carbon sugar) are aligned in a one-dimensional sequence.

Similar to proteins, RNA and DNA have unique functions according to the pattern of their sequences (codes). Basic functions of DNA and RNA are self-replication (transcription) and protein synthesis, and more detailed functions (blocks) of transcription and synthesis include, for example, a translation function for protein synthesis in messenger RNA, and a function of transcriptional activity by promoter DNA.

These functions can be confirmed by measuring specific information as in the example of the semiconductor or the like. For example, information of affinity information of antibody binding to protein sequence information is confirmed by a degree of equilibrium deviation, and information of enzyme activity is confirmed by measurement of enzyme activity rate. Information regarding the phenotypic expression of an organism with respect to gene sequence information (measurement of the translational efficiency of messenger RNA and the transcription efficiency of promoter DNA, which can be regarded as labeling from the viewpoint of constructing a database (dataset of genes and molecules).

It has been found that proteins, RNAs, and DNAs have a desired function in a pattern at a specific location in a combination of enormous sequences. On the other hand, there are many locations where it is not known what function is provided.

In particular, in the case of DNA, assuming that the sequence is an information storage and that the format has a configuration in which two parts of a coding region and a non-coding region are mixed will facilitate understanding of the configuration. The coding region is a region in which correspondence with information of a protein to be generated or a character of an organism as a result thereof is clear. On the other hand, the non-coding region is a region in which the relationship with the characteristics of the protein to be generated and the organism to be expressed is not clear and which is considered to be a region apparently irrelevant to genetic information.

A non-coding region has a low correlation with genetic information and has not been investigated much in the past. However, recently, in DNA and the like, there is a positively promoted idea of actively analyzing information from a region other than a coding region and using the information for analysis of a function thereof.

For example, a certain neurodegenerative disease is caused by accumulation of abnormal protein (Alpha-synuclein, Lewy bodies, etc.) in brain cells. A region considered to be related to this abnormal protein is known from an example in the case of familial (hereditary), but in the case of sporadic type that is not familial (hereditary), which region has a relation is not clear.

Therefore, for example, while expanding the search area from the known related region, searching for a new sequence region or pattern involved in the same function (synthesis of an abnormal protein) or finding another function correlated with synthesis of an abnormal protein is promoted.

While analysis of a non-coding region is in progress for the purpose of finding a new pattern or a new function, a large number of combinations of non-coding regions are conceivable similarly to the coding regions, and thus there is a need to use an appropriate search.

In view of this, the information processing system 1 is applicable to an efficient search for a new sequence pattern unique to each function from these proteins, RNA, and DNA, and to the discovery of a new function from the searched pattern.

Hereinafter, an efficient search for a sequence pattern will be first described, and then a procedure of finding a new function from the searched pattern will be described.

(Procedure #1. Collection of dataset used for statistical prediction model)

First, procedure #1 will be described. The information processing system 1 utilizes a prediction model to acquire new information from a dataset. A prediction model here refers to a model that outputs a predictive value or a score of a probability distribution that a sequence pattern of a biomolecule has a specific function in response to an input of the sequence pattern. For example, in the case of the above-described neurodegenerative disease, there is a prediction model (discriminant model) that predicts whether the pattern corresponds to a sequence pattern involved in synthesis of an abnormal protein. Construction of such a prediction model first requires a dataset of a correspondence relationship between a sequence pattern and a predicted value of a function or the like. This dataset is constructed by measuring information related to a function desired to be predicted for each of a large number of sequence patterns. Alternatively, the function information may be obtained by reverse lookup from a known database based on the function information.

(Procedure #2. Training statistical prediction model by machine learning)

Next, procedure #2 will be described. Following procedure #1, the information processing system 1 designs a prediction model with parameters and obtains the parameters by a machine learning technique. A representative prediction model is a neural network, and a parameter can be obtained by deep learning.

Although the design of the prediction model varies depending on the function to be predicted, the design is roughly summarized as follows.

· The input layer is configured to be able to input information of the sequence pattern.
· The intermediate layer is configured based on the setting of the developer.
· The output layer is configured according to a function to be predicted.

The following design guidelines (a) to (c) regarding the output are common.

The design guideline (a) is a policy as follows.

In the design guideline (a), when the evaluation value of the function is a continuous value, the final layer is set to be a linear layer. When the evaluation value is a continuous value, a prediction model based on a regression model is to be adopted. In the case of a prediction model using a neural network, a linear layer is used as the final layer (output layer). By using a linear layer as the output layer, a regression model as described in the third exemplary embodiment can be used. In a case where it is desired to predict not only the prediction value itself of the continuous value but also the standard deviation, variance, and the like thereof, it is allowable to output an average prediction value and a variance prediction value using a variational auto coder. In the regression model, training is performed to minimize a square error. In the variational auto encoder, the training is performed so as to maximize the lower bound of the log likelihood in consideration of the variance (in many cases, covariance is not included).

The design guideline (b) is a policy as follows.

There is a case where the evaluation value of a function is to be made with two classes such as the presence or absence, for example, a case where the evaluation of the function is desirably made based on the presence or absence of a certain characteristic. In such a case, two-class classification is appropriate. As described in the third exemplary embodiment, the two-class classification uses a linear layer having a logistic regression function as the final layer. The logistic regression function is a function that outputs a value from 0 to 1 for a certain input. Regarding this structure as approximating probabilities of 0 to 1, training is performed so as to minimize its entropy, that is, logistic entropy.

The design guideline (c) is a policy as follows.

In a case where the evaluation value of the function is in multiple classes, that is, in a case where the function corresponds to any of multiple characteristics, or the like, application of a model for multi-class classification is to be applied. In the multi-class classification, as described in the third exemplary embodiment, a linear layer having a softmax function as a final layer is used. The softmax function is normalized such that for any input, the output is the score of any of the possible classes. These scores are normalized such that sum of all the scores will be 1. The model can be trained to regard this structure as a multi-class probability value in multi-class classification. The training is performed to minimize the softmax entropy.

The above is a method for designing an output layer of a prediction model using a neural network as a common method.

(Procedure #3. Selection of optimal sample by information processing system 1)

Next, procedure #3 will be described. The prediction model can be constructed by the above-described procedure. Now, the following is the main application range of the information processing system 1 in the sixth exemplary embodiment. According to the sixth exemplary embodiment, it is possible to indicate the most ambiguous region on the data space for the prediction model, that is, the region having the largest amount of information obtained by verification. Alternatively, the sample information can be provided. In addition, according to the sixth exemplary embodiment, a plurality of samples can be provided at the same time, and the samples that are not similar to each other are selected so as to increase the amount of information.

As described above, in the sixth exemplary embodiment, a guideline for increasing the amount of information is adopted as a guideline in selecting an appropriate sample from a huge region.

However, merely setting a guideline for increasing the amount of information does not increase the search efficiency of the enormous search area. In the case of the sixth exemplary embodiment, since it is known that the search of the enormous search area is included in the search problem of submodular maximization, the greedy method is commonly used as a general-purpose approximation method thereof. The greedy method is a method for efficiently searching a huge search area, and is less likely to cause explosion of calculation time referred to as combinatorial explosion. Therefore, by selecting an appropriate sample with this method, an appropriate sample can be efficiently selected. However, while the greedy method is generic and fast, it is desirable to employ better approximations if any.

In the sixth exemplary embodiment, a huge search area is narrowed using quantum annealing, in which it guaranteed to reach an optimal solution under ideal conditions (conditions satisfying adiabatic approximation). The method and formulation are as described in the first to fourth exemplary embodiments. In addition to quantum annealing, thermal annealing simulation (simulated annealing) or the like is also used as an example in which it is guaranteed to reach an optimal solution.

By using the above, it is possible to select an optimal sample suitable for the state of the current prediction model from a huge number of samples.

(Procedure #4. Analysis of selected samples)

Next, procedure #4 will be described. Finally, an analysis is performed on the selected sample. The original purpose is to discriminate the presence or absence of a function of a sample, to classify a function into a category, or to quantify the degree of a function.

It is most efficient to analyze only the selected sample without performing these experiments on all samples. This indicates that, among all samples, the sample capable of predicting information related to a function with high reliability only by a prediction model without measurement, or the sample that cannot derive relevance of information or regularity due to a small amount of information in the region even when measurement is performed, will not be so effective even when verification of the sample is performed.

By performing evaluation on the sample that is moderately ambiguous and thus has a large amount of information from the viewpoint of the prediction model, that is, already analyzed knowledge, efficient construction of a dataset has been implemented. Finally, by finding a new sequence pattern (particularly from a non-coding region) or finding a new function common to these sequence patterns from this sample, not only the prediction model but also the researcher himself/herself can efficiently expand the knowledge.

[10. Other configuration examples, etc.]

The processing according to the above-described embodiments and modifications may be performed in various different forms (modifications) other than the above-described embodiments and modifications. Note that, in the above-described example, a dataset serving as a population for selecting a subset may be replaced with a "first dataset", and a subset selected from the first dataset may be replaced with a "second dataset".

[10-1. Other configuration examples]

In the above example, a case where the information processing device 100 and the optimization machine 10 are separate from each other. However, the information processing device 100 and the optimization machine 10 may be integrated to each other. For example, when the optimization machine 10 is implemented by a digital circuit without using superconductivity, the optimization machine 10 may be arranged on the edge side. For example, in a case where the calculation using the Ising model is performed on the edge side, the information processing device 100 and the optimization machine 10 may be integrated to each other.

[10-2. Method of generating information used for processing of program, parameters, etc.]

A method of performing the above-described information processing, or generating the parameters, and the like may be provided. Furthermore, a method of generating a program used when the above-described optimization machine 10 executes calculation may be provided.

[10-3. Others]

Furthermore, among each processing described in the above embodiments, all or a part of the processing described as being performed automatically can be manually performed, or the processing described as being performed manually can be performed automatically by a known method. In addition, the processing procedures, specific names, and information including various data and parameters illustrated in the above specifications or drawings can be changed in any manner unless otherwise specified. For example, a variety of information illustrated in each of the drawings are not limited to the information illustrated.

In addition, each of components of each device is provided as a functional and conceptual illustration and thus does not necessarily need to be physically configured as illustrated. That is, the specific form of distribution/integration of each device is not limited to those illustrated in the drawings, and all or a part thereof may be functionally or physically distributed or integrated into arbitrary units according to various loads and use conditions.

Furthermore, the above-described embodiments and modifications can be appropriately combined within a range implementable without contradiction of processing.

The effects described in the present specification are merely examples, and thus, there may be other effects, not limited to the exemplified effects.

[11. Effects according to present disclosure]

As described above, the information processing device (for example, corresponding to the information processing device 100 in the embodiment) according to the present disclosure includes the acquisition unit (for example, corresponding to the acquisition unit 131 in the embodiment) and the selection unit (for example, corresponding to the dataset selection unit 134 in the embodiment). The acquisition unit acquires a data supply method, a model to be trained, and designation information related to a size and a category of a sample set used for the training of the model. The selection unit selects a sample set to be used for the training of the model from the dataset based on information entropy determined according to the model and the designation information.

In this manner, the information processing device selects a sample set from the dataset based on the objective function determined according to the model to be trained and based on the designation information. This makes it possible for the information processing device to select an appropriate sample set from the dataset.

A data supply method relates to a data supply from a dataset, where a sample set is a subset of the dataset. In this manner, the information processing device can select an appropriate sample set from the dataset by receiving data supply from the dataset and selecting the subset of the dataset as a sample set.

The model to be trained is a prediction model with a learning parameter, and the task of the model is a type classification of an output corresponding to an input. In this manner, the information processing device can select an appropriate sample set from the dataset by selecting a prediction model with learning parameters as a model to be trained.

In addition, the information entropy provided to the model is an information entropy calculated by using "Kullback-Leibler divergence" or Fisher information. In this manner, the information processing device can select an appropriate sample set from the dataset by selecting the sample set from the dataset based on the information entropy calculated using the Kullback-Leibler divergence or the Fisher information.

The selection unit selects a sample set so as to optimize an objective function indicating information entropy provided to the model. In this manner, the information processing device can select an appropriate sample set from the dataset by selecting the sample set so as to optimize the objective function indicating information entropy.

In addition, the selection unit selects a sample set based on an objective function expressed in the quadratic unconstrained binary optimization (QUBO) format. In this manner, the information processing device can select an appropriate sample set from the dataset by selecting the sample set from the dataset based on the objective function expressed in the QUBO format.

In addition, the information processing device includes the optimization machine communication unit (for example, this corresponds to the optimization machine communication unit 133 in the embodiment). The optimization machine communication unit transmits a coefficient matrix corresponding to the objective function to an optimization machine (for example, corresponding to the optimization machine 10 in the embodiment) that performs combinatorial optimization calculation, and receives a calculation result of the combinatorial optimization calculation from the optimization machine. The selection unit selects a sample set based on the calculation result. In this manner, by selecting the sample set from the dataset based on the objective function indicating the gain using the calculation result by the optimization machine, the information processing device can select an appropriate sample set from the dataset.

The optimization machine communication unit receives, from the optimization machine, a calculation result indicating the variable after the combinatorial optimization calculation. In this manner, by selecting the sample set from the dataset using the variable after the combinatorial optimization calculation received from the optimization machine, the information processing device can select an appropriate sample set from the dataset.

The optimization machine communication unit receives, from the optimization machine, a calculation result related to binary variables each corresponding to data. In this manner, by selecting the sample set from the dataset using the optimized binary variable received from the optimization machine, the information processing device can select an appropriate sample set from the dataset.

In addition, the optimization machine communication unit transmits the coefficient matrix to the quantum computer or the combinatorial optimization accelerator. In this manner, by selecting the sample set from the dataset using the calculation result by the quantum computer or the combinatorial optimization accelerator, the information processing device can select an appropriate sample set from the dataset.

The optimization machine communication unit transmits the coefficient matrix to an optimization machine selected by the user among the plurality of optimization machines. In this manner, by transmitting the coefficient matrix to the optimization machine selected by the user among the plurality of optimization machines, the information processing device can select a sample set according to the selection of the user, making it possible to select an appropriate sample set from the dataset.

The information processing device includes the extraction unit (for example, this corresponds to the optimization coefficient extraction unit 132 in the embodiment). The extraction unit extracts a coefficient matrix. The optimization machine communication unit transmits the coefficient matrix extracted by the extraction unit to the optimization machine. In this manner, by transmitting the extracted coefficient matrix to the optimization machine, the information processing device can receive an appropriate calculation result from the optimization machine, making it possible to select an appropriate sample set from the dataset.

The extraction unit extracts a coefficient matrix corresponding to the Ising coefficient from the objective function. In this manner, by transmitting the coefficient matrix corresponding to the Ising coefficient extracted from the objective function to the optimization machine, the information processing device can receive an appropriate calculation result from the optimization machine, making it possible to select an appropriate sample set from the dataset.

The acquisition unit acquires a model that is a prediction model that the user desires to train. In this manner, the information processing device can select an appropriate sample set from the dataset for the prediction model that the user desires to train.

Furthermore, the information processing device includes the output unit (for example, this corresponds to the output unit 135 in the embodiment). The output unit outputs information related to the sample set selected by the selection unit. In this manner, by outputting the information related to the selected sample set, the information processing device can provide appropriate information according to the selected sample set.

The output unit transmits the sample set to the terminal device (for example, this corresponds to the terminal device 20 in the embodiment) used by the user. In this manner, by transmitting the sample set to the terminal device used by the user, the information processing device can provide the selected sample set to the user.

In addition, the output unit transmits the trained model that has been trained by using the sample set to the terminal device used by the user. In this manner, by transmitting the trained model that has been trained using the sample set to the terminal device used by the user, the information processing device can provide the appropriately trained model to the user.

[12. Hardware Configuration]

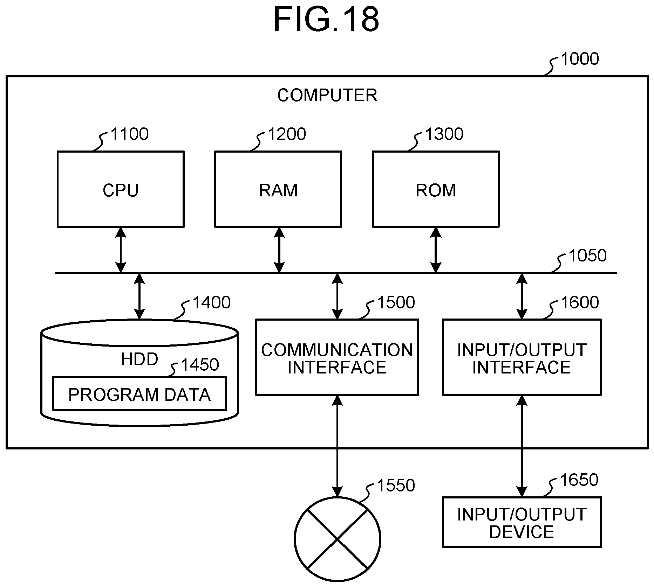

The information device such as the information processing device 100 according to the above-described individual embodiments and modifications are implemented by a computer 1000 having a configuration as illustrated in FIG. 18, for example. FIG. 18 is a hardware configuration diagram illustrating an example of a computer that implements functions of the information processing device. Hereinafter, the information processing device 100 will be described as an example. The computer 1000 includes a CPU 1100, RAM 1200, read only memory (ROM) 1300, a hard disk drive (HDD) 1400, a communication interface 1500, and an input/output interface 1600. Individual components of the computer 1000 are interconnected by a bus 1050.

The CPU 1100 operates based on a program stored in the ROM 1300 or the HDD1400 so as to control each of components. For example, the CPU 1100 develops the program stored in the ROM 1300 or the HDD1400 into the R_AM 1200 and executes processing corresponding to various programs.

The ROM 1300 stores a boot program such as a basic input output system (BIOS) executed by the CPU 1100 when the computer 1000 starts up, a program dependent on hardware of the computer 1000, or the like.

The HDD1400 is a non-transitory computer-readable recording medium that records a program executed by the CPU 1100, data used by the program, or the like. Specifically, the HDD 1400 is a recording medium that records an information processing program such as an information processing program according to the present disclosure, which is an example of program data 1450.

The communication interface 1500 is an interface for connecting the computer 1000 to an external network 1550 (for example, the Internet). For example, the CPU 1100 receives data from other devices or transmits data generated by the CPU 1100 to other devices via the communication interface 1500.

The input/output interface 1600 is an interface for connecting an input/output device 1650 with the computer 1000. For example, the CPU 1100 receives data from an input device such as a keyboard or a mouse via the input/output interface 1600. In addition, the CPU 1100 transmits data to an output device such as a display, a speaker, or a printer via the input/output interface 1600. Furthermore, the input/output interface 1600 may function as a media interface for reading a program or the like recorded on predetermined recording medium (or simply medium). Examples of the media include optical recording media such as a digital versatile disc (DVD) or a phase change rewritable disk (PD), a magneto-optical recording medium such as a magneto-optical disk (MO), a tape medium, a magnetic recording medium, and semiconductor memory.

For example, when the computer 1000 functions as the information processing device 100, the CPU 1100 of the computer 1000 executes an information processing program such as the information processing program loaded on the RAM 1200 so as to implement the functions of the control unit 130 and the like. Furthermore, the HDD 1400 stores the information processing program such as the information processing program according to the present disclosure or data in the storage unit 120. While the CPU 1100 executes program data 1450 read from the HDD1400, the CPU 1100 may acquire these programs from another device via the external network 1550, as another example.

Note that the present technique can also have the following configurations.

(1) An information processing device comprising:

an acquisition unit that acquires a data supply method, a model to be trained, and designation information related to a size and a category of a sample set to be used for training of the model; and
a selection unit that selects a sample set to be used for the training of the model from a dataset based on information entropy determined according to the model and based on the designation information.

(2) The information processing device according to (1),
wherein the data supply method is data supply from the dataset, and the sample set is a subset of the dataset.
(3) The information processing device according to (1) or (2),
wherein the model to be trained is a prediction model with a learning parameter, and the task of the model is a type classification of an output corresponding to an input.
(4) The information processing device according to any one of (1) to (3),
wherein information entropy provided to the model is information entropy calculated by using Kullback-Leibler divergence or Fisher information.
(5) The information processing device according to any one of (1) to (4),
wherein the selection unit selects a sample set so as to optimize an objective function indicating information entropy provided to the model.
(6) The information processing device according to (5),
wherein the selection unit selects the sample set based on the objective function expressed in a quadratic unconstrained binary optimization (QUBO) format.
(7) The information processing device according to (5) or (6), further comprising

an optimization machine communication unit that transmits a coefficient matrix corresponding to the objective function to an optimization machine configured to perform combinatorial optimization calculation and that receives a calculation result of the combinatorial optimization calculation from the optimization machine,
wherein the selection unit selects the sample set based on the calculation result.

(8) The information processing device according to (7),
wherein the optimization machine communication unit receives, from the optimization machine, a calculation result indicating a variable after the combinatorial optimization calculation.
(9) The information processing device according to (8),
wherein the optimization machine communication unit receives, from the optimization machine, the calculation result related to binary variables each corresponding to data.
(10) The information processing device according to any one of (7) to (9),
wherein the optimization machine communication unit transmits the coefficient matrix to a quantum computer or a combinatorial optimization accelerator.
(11) The information processing device according to any one of (7) to (10),
wherein the optimization machine communication unit transmits the coefficient matrix to an optimization machine selected by the user among a plurality of the optimization machines.
(12) The information processing device according to any one of (7) to (11), further comprising

an extraction unit that extracts the coefficient matrix,
wherein the optimization machine communication unit transmits the coefficient matrix extracted by the extraction unit to the optimization machine.

(13) The information processing device according to (12),

wherein the extraction unit extracts the coefficient matrix corresponding to an input of the optimization machine from the objective function.

(14) The information processing device according to any one of (1) to (13),

wherein the acquisition unit acquires a model that is a prediction model that the user desires to train.

(15) The information processing device according to any one of (1) to (14), further comprising

an output unit that outputs information related to the sample set selected by the selection unit.

(16) The information processing device according to (15),

wherein the output unit transmits the sample set to a terminal device used by a user.

(17) The information processing device according to (15) or (16),

wherein the output unit transmits a trained model, which has been trained using the sample set, to a terminal device used by a user.

(18) An information processing method comprising:

acquiring a data supply method, a model to be trained, and designation information related to a size and a category of a sample set to be used for training of the model; and

selecting a sample set to be used for the training of the model from a dataset based on information entropy determined according to the model and based on the designation information.

(19) An information processing program that enables processing to be executed, the processing comprising:

acquiring a data supply method, a model to be trained, and designation information related to a size and a category of a sample set to be used for training of the model; and

selecting a sample set to be used for the training of the model from a dataset based on information entropy determined according to the model and based on the designation information.

Reference Signs List

| | |
|---|---|
| 1 | INFORMATION PROCESSING SYSTEM |
| 100 | INFORMATION PROCESSING DEVICE |
| 110 | COMMUNICATION UNIT |
| 120 | STORAGE UNIT |
| 121 | DATA STORAGE UNIT |
| 122 | FUNCTION INFORMATION STORAGE UNIT |
| 130 | CONTROL UNIT |
| 131 | ACQUISITION UNIT |
| 132 | OPTIMIZATION COEFFICIENT EXTRACTION UNIT |
| 133 | OPTIMIZATION MACHINE COMMUNICATION UNIT |
| 134 | DATASET SELECTION UNIT |
| 135 | OUTPUT UNIT |
| 10 | OPTIMIZATION MACHINE |
| 11 | COMMUNICATION UNIT |
| 12 | STORAGE UNIT |
| 13 | QUANTUM DEVICE UNIT |
| 14 | CONTROL UNIT |
| 141 | ACQUISITION UNIT |
| 142 | CALCULATION UNIT |
| 143 | TRANSMISSION UNIT |
| 20 | TERMINAL DEVICE |
| 50 | DATABASE |

**Claims**

1. An information processing device comprising:

an acquisition unit that acquires a data supply method, a model to be trained, and designation information related to a size and a category of a sample set to be used for training of the model; and
a selection unit that selects a sample set to be used for the training of the model from a dataset based on information entropy determined according to the model and based on the designation information.

2. The information processing device according to claim 1,
wherein the data supply method is data supply from the dataset, and the sample set is a subset of the dataset.

3. The information processing device according to claim 1,
wherein the model to be trained is a prediction model with a learning parameter, and the task of the model is a type classification of an output corresponding to an input.

4. The information processing device according to claim 1,
wherein information entropy provided to the model is information entropy calculated by using Kullback-Leibler divergence or Fisher information.

5. The information processing device according to claim 1,
wherein the selection unit selects a sample set so as to optimize an objective function indicating information entropy provided to the model.

6. The information processing device according to claim 5,
wherein the selection unit selects the sample set based on the objective function expressed in a quadratic unconstrained binary optimization (QUBO) format.

7. The information processing device according to claim 5, further comprising

an optimization machine communication unit that transmits a coefficient matrix corresponding to the objective function to an optimization machine configured to perform combinatorial optimization calculation and that receives a calculation result of the combinatorial optimization calculation from the optimization machine,
wherein the selection unit selects the sample set based on the calculation result.

8. The information processing device according to claim 7,
wherein the optimization machine communication unit receives, from the optimization machine, a calculation result indicating a variable after the combinatorial optimization calculation.

9. The information processing device according to claim 8,
wherein the optimization machine communication unit receives, from the optimization machine, the calculation result related to binary variables each corresponding to data.

10. The information processing device according to claim 7,
wherein the optimization machine communication unit transmits the coefficient matrix to a quantum computer or a combinatorial optimization accelerator.

11. The information processing device according to claim 7,
wherein the optimization machine communication unit transmits the coefficient matrix to an optimization machine selected by the user among a plurality of the optimization machines.

12. The information processing device according to claim 7, further comprising

an extraction unit that extracts the coefficient matrix,
wherein the optimization machine communication unit transmits the coefficient matrix extracted by the extraction unit to the optimization machine.

13. The information processing device according to claim 12,
wherein the extraction unit extracts the coefficient matrix corresponding to an input of the optimization machine from the objective function.

14. The information processing device according to claim 1,
wherein the acquisition unit acquires a model that is a prediction model that the user desires to train.

**15.** The information processing device according to claim 1, further comprising
an output unit that outputs information related to the sample set selected by the selection unit.

**16.** The information processing device according to claim 15,
wherein the output unit transmits the sample set to a terminal device used by a user.

**17.** The information processing device according to claim 15,
wherein the output unit transmits a trained model, which has been trained using the sample set, to a terminal device used by a user.

**18.** An information processing method comprising:

acquiring a data supply method, a model to be trained, and designation information related to a size and a category of a sample set to be used for training of the model; and
selecting a sample set to be used for the training of the model from a dataset based on information entropy determined according to the model and based on the designation information.

**19.** An information processing program that enables processing to be executed, the processing comprising:

acquiring a data supply method, a model to be trained, and designation information related to a size and a category of a sample set to be used for training of the model; and
selecting a sample set to be used for the training of the model from a dataset based on information entropy determined according to the model and based on the designation information.

# FIG.1

1

# FIG.2

START

**S1**
RECEIVE REQUEST FOR DATASET
FROM TERMINAL DEVICE

**S2**
REQUEST OPTIMUM COMBINATION
INFORMATION OF DATA TO
OPTIMIZATION MACHINE

**S3**
PROVIDE DATA TO TERMINAL DEVICE
ACCORDING TO OPTIMIZATION

**S4**
WAITING

END

# FIG.3

EP 4 365 781 A1

# FIG.4

CT1

SELECT MACHINE TO USE.

| MACHINE A | MACHINE B | MACHINE C | MACHINE D |
|---|---|---|---|
| ·SIZE: MEDIUM TO SMALL<br>·FULL CONNECTION: UNAVAILABLE<br>·ACCURACY: HIGH<br>·SPEED: HIGH<br>·COMMUNICA-TION: SLOW<br>·PRICE: HIGH | ·SIZE: LARGE<br>·FULL CONNECTION: UNAVAILABLE<br>·ACCURACY: LOW<br>·SPEED: HIGH<br>·COMMUNICA-TION: SLOW<br>·PRICE: LOW | ·SIZE: MEDIUM TO SMALL<br>·FULL CONNECTION: UNAVAILABLE<br>·ACCURACY: HIGH<br>·SPEED: MEDIUM<br>· COMMUNICA-TION: SLOW<br>·PRICE: HIGH | ·SIZE: MEDIUM TO SMALL<br>·FULL CONNECTION: AVAILABLE<br>·ACCURACY: UNKNOWN<br>·SPEED: UNKNOWN<br>·COMMUNICA-TION: SLOW<br>·PRICE: FREE |

# FIG.5

DATABASE — 50

DATA READING UNIT — 131a

USER DATA INPUT UNIT — 131b

OPTIMIZATION COEFFICIENT EXTRACTION UNIT — 132

OPTIMIZATION MACHINE COMMUNICA-TION UNIT — 133

DATASET SELECTION UNIT — 134

OUTPUT UNIT — 135

EP 4 365 781 A1

# FIG.6

# FIG.7

EP 4 365 781 A1

PG1

```
model = load_model()                         #READ FUNCTION TO BE TRAINED
dataset = load_dataset()                      #READ DATASET
userdata = load_userdata()                    #READ USER DATA
dataset = dataset + userdata                  #MERGE DATASET WITH USER DATA
subset = resample_optimal_subset(model, dataset)   #RESAMPLE SUBSET
```

# FIG.8

START

$\downarrow$

S101

INPUT USER DATA AND DATASET

$\downarrow$

S102

ACQUIRE QUADRATIC FORM MATRIX OF INFORMATION AMOUNT FOR DATA COMBINATION

$\downarrow$

S103

TRANSMIT COEFFICIENT MATRIX TO COMBINATORIAL OPTIMIZATION MACHINE

$\downarrow$

S104

RECEIVE OPTIMIZATION SOLUTION FROM COMBINATORIAL OPTIMIZATION MACHINE

$\downarrow$

S105

IS PREDETERMINED END CONDITION SATISFIED? — NO

YES $\downarrow$

S106

SELECT DATA TO PROVIDE

$\downarrow$

S107

OUTPUT DATASET

$\downarrow$

END

# FIG.9

~PG2

```
function resample_optimal_subset(model, dataset)
    b = sample_binaries(N)                          #BINARY VARIABLE
    machine = OptimizingMachine()                   #MACHINE SUPPORTED BY LIBRARY
    while(not converged) {
      subset = make_subset(b, dataset)
      w = maximum_likelihood(model, subset)         #PROCESSING OF UPDATING MODEL WITH SUBSET
      hessians = calc_hessaians(w, dataset)         #PROCESSING OF CALCULATING FISHER INFORMATION
      x = calc_additional_variables(hessians, b)    #PROCESSING OF TURNING TO QUADRATIC FORM
                                                     USING AUXILIARY VARIABLE
      q = calc_qubo_coefficients(hessians, x)       #EXTRACT ISING COEFFICIENT FROM QUADRATIC FORM
      b_= machine.get_optimul(q)                    #FUNCTION SUPPORTED BY LIBRARY
    }
    return subset
```

EP 4 365 781 A1

# FIG.10

INFORMATION PROCESSING DEVICE ⌐100

110 ⌐

CONTROL UNIT ⌐130

STORAGE UNIT ⌐120

COMMUNICATION UNIT

ACQUISITION UNIT ⌐131

OPTIMIZATION COEFFICIENT EXTRACTION UNIT ⌐132

OPTIMIZATION MACHINE COMMUNICATION UNIT ⌐133

DATASET SELECTION UNIT ⌐134

OUTPUT UNIT ⌐135

DATA STORAGE UNIT ⌐121

FUNCTION INFORMATION STORAGE UNIT ⌐122

# FIG.11

# FIG.12

CT2

| CLASS | SAMPLE #1 | SAMPLE #2 | SAMPLE #3 | SAMPLE #4 | ⋯ |
|---|---|---|---|---|---|
| MOUSE | MOUSE IMAGE #1 | MOUSE IMAGE #2 | MOUSE IMAGE #3 | MOUSE IMAGE #4 | ⋯ |
| COW | COW IMAGE #1 | COW IMAGE #2 | COW IMAGE #3 | COW IMAGE #4 | ⋯ |
| TIGER | TIGER IMAGE #1 | TIGER IMAGE #2 | TIGER IMAGE #3 | TIGER IMAGE #4 | ⋯ |
| DRAGON | DRAGON IMAGE #1 | DRAGON IMAGE #2 | DRAGON IMAGE #3 | DRAGON IMAGE #4 | ⋯ |
| ⋯ | ⋯ | ⋯ | ⋯ | ⋯ | ⋯ |

# FIG.13

CT3

INPUT NAME OF CLASS TO TRAIN

CL1

MOUSE

CL2

TIGER

...

# FIG.14

CT4

INPUT CLASS NAME TO TRAIN AND UPLOAD DATA

CLASS                    DATASET TO BE UPLOADED

DAYLILY                 C:¥MyDataset¥ALPINE PLANT¥DAYLILY

CLICK HERE TO ADD CLASS

# FIG.15

FAMILY LEMURIDAE  FAMILY LORISIDAE  FAMILY CEBIDAE  FAMILY CERCOPITHECIDAE  FAMILY HOMINIDAE  FAMILY HYLOBATIDAE  TG1

GENUS CERCOPITHECUS  GENUS PAPIO  GENUS MACACA Macaca  GENUS COLOBUS  GENUS NASALIS  GENUS TRACHYPITHECUS

TG2

50-1
ANIMAL SYSTEMATICS DATASET

131a-1
FAMILY CERCOPITHECIDAE READING UNIT

131b-1
GENUS MACACA IMAGE INPUT UNIT

231
DATASET MERGING UNIT

232
COMBINATORIAL OPTIMIZATION EXECUTION UNIT

134
DATASET SELECTION UNIT

135-1
NON-GENUS MACACA IMAGE OUTPUT UNIT

10a(10)
OPTIMIZATION MACHINE

10b(10)
OPTIMIZATION MACHINE

10c(10)
OPTIMIZATION MACHINE

...

EP 4 365 781 A1

# FIG.16

```
                    ┌─────────────┐
                    │    START    │
                    └──────┬──────┘
                           │            ⌐S201
            ┌──────────────▼──────────────┐
            │   RECEIVE DATA FROM CLIENT   │
            └──────────────┬──────────────┘
                           │            ⌐S202
            ┌──────────────▼──────────────┐
            │  COLLECT DATA FROM DATABASE  │
            └──────────────┬──────────────┘
                           │            ⌐S203
            ┌──────────────▼──────────────┐
            │  CALCULATE INPUT TO OPTIMIZATION │
            │  MACHINE FROM COLLECTED DATA │
            └──────────────┬──────────────┘
                           │            ⌐S204
            ┌──────────────▼──────────────┐
            │    GENERATE SUBSET BASED ON  │
            │ OUTPUT OF OPTIMIZATION MACHINE │
            └──────────────┬──────────────┘
                           │            ⌐S205
            ┌──────────────▼──────────────┐
            │   PROVIDE SUBSET TO CLIENT   │
            └──────────────┬──────────────┘
                           │
                    ┌──────▼──────┐
                    │     END     │
                    └─────────────┘
```

# FIG.17

```
 ⌐IM1                ⌐S301              ⌐S302                    ⌐RS2
┌──────┐      ┌──────────────┐ YES ┌──────────────┐      ┌ ─ ─ ─ ─ ─ ─ ┐
│      │      │ DOES OBJECT  │────▶│ WHAT TYPE OBJECT │──▶  JAPANESE
│      │─────▶│  BELONG TO   │     │ BELONGS TO IN │      │ MACAQUE     │
│      │      │ GENUS MACACA?│     │ GENUS MACACA? │       ─ ─ ─ ─ ─ ─ ─
└──────┘      └──────┬───────┘     └──────────────┘      └ ─ ─ ─ ─ ─ ─ ┘
                     │NO
                     │      ⌐RS1
              ┌ ─ ─ ─▼─ ─ ─ ┐
                NOT BELONGING
              │  TO GENUS    │
                 MACACA
              └ ─ ─ ─ ─ ─ ─ ┘
```

# FIG.18

~1000

COMPUTER

~1100

CPU

~1200

RAM

~1300

ROM

~1050

~1400

HDD ~1450

PROGRAM DATA

~1500

COMMUNICATION
INTERFACE

~1600

INPUT/OUTPUT
INTERFACE

~1550

~1650

INPUT/OUTPUT
DEVICE

| **INTERNATIONAL SEARCH REPORT** | International application No. |
| --- | --- |
| | **PCT/JP2022/002805** |

**A. CLASSIFICATION OF SUBJECT MATTER**

*G06N 20/00*(2019.01)i; *G06N 99/00*(2019.01)i
FI: G06N20/00; G06N99/00 180

According to International Patent Classification (IPC) or to both national classification and IPC

**B. FIELDS SEARCHED**

Minimum documentation searched (classification system followed by classification symbols)

G06N20/00; G06N99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | KILLAMSETTY, K. et al. GLISTER: Generalization based Data Subset Selection for Efficient and Robust Learning. arXiv.org [online]. 19 December 2020, [retrieved on 12 April 2022], Retrieved from the Internet: <URL: https://arxiv.org/abs/2012.10630v1> pp. 3-6 | 1-19 |
| Y | Cross Entropy. Wikipedia [online]. 29 December 2018, [retrieved on 12 April 2022], Retrieved from the Internet: <URL: https://en.wikipedia.org/w/index.php?title=Cross_entropy&oldid=875854246> section "Definition", "Relation to log-likelihood" | 1-19 |
| Y | RAHMAN, M. T. et al. Near-Optimal Resampling in Particle Filters Using the Ising Energy Model. 2021 IEEE International Conference on Acoustics. Speech and Signal Processing (ICASSP 2021) [online]. 06 June 2021, pp. 5464-5468, [retrieved on 12 April 2021], Retrieved from the Internet: <URL: https://ieeexplore.ieee.org/document/9413633>, <DOI: 10.1109/ICASSP39728.9413633> section 4 | 6-13 |

☐ Further documents are listed in the continuation of Box C.   ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **05 April 2022** | **19 April 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KAIMING HE ; XIANGYU ZHANG ; SHAOQING REN ; JIAN SUN.** *Deep Residual Learning for Image Recognition,* 23 June 2021, https://arxiv.org/abs/1512.03385